# EUROPEAN PATENT SPECIFICATION

(11) **EP 4 121 483 B1**
(45) Date of publication and mention of the grant of the patent: **08.05.2024**
(21) Application number: 21711602.9
(22) Date of filing: 18.03.2021
(51) Int. Cl.: C08L 77/02, C08L 77/08, C08L 77/06, C08G 69/36

(54) **PLASTICIZED POLYAMIDE MOLDING COMPOSITIONS**
FORMMASSEN AUS PLASTIFIZIERTEM POLYAMID
COMPOSITIONS DE MOULAGE DE POLYAMIDE PLASTIFIÉ

(30) Priority: 20.03.2020 EP 20164538
(43) Date of publication of application: 25.01.2023
(73) Proprietor: BASF SE, 67056 Ludwigshafen am Rhein (DE)
(72) Inventor: SPIES, Patrick, 67056 Ludwigshafen (DE)
(74) Representative: BASF IP Association
(86) International application number: PCT/EP2021/056912
(87) International publication number: WO 2021/185949

(56) References cited:
- WO-A1-2010/137725
- CN-A- 107 760 022
- US-A1- 2015 051 329

## Description

The invention relates to thermoplastic molding compositions comprising polyamide and a plasticizer.

The invention further relates to the use of the molding compositions of the invention for producing fibers, foils and moldings of any type, and also to the resultant fibers, foils and moldings.

Furthermore, the invention relates to the use of a specific compound as plasticizer for polyamides.

Polyamides can be modified by adding plasticizers in order to achieve decreased tensile modulus and increased flexibility. The plasticizer typically decreases the glass transition temperature of the polyamide. By employing plasticizers in polyamides, specific mechanical properties result. The plasticized polyamide typically has a lower E-module and a higher elongation at break when compared to a polyamide without plasticizer. Furthermore, plasticized polyamides typically have an increased impact strength compared to non-plasticized polyamides.

Typical applications for the modified polyamides can be extruded pipes, e.g. for the automotive sector like break fluid pipes. Further applications are cable lead systems or cable management systems, shoe soles, matrices for the preparation of rubber hoses (mandrels), sports equipment like ski boots or football boots.

Suitable plasticizers are typically low molecular weight compounds.

Kunststoff-Handbuch, Band VI Polyamide, Carl Hanser Verlag München 1966, Section 3.4.2.1. b) on pages 238 and 239 in connection with Table 7 describes suitable plasticizers. They can be divided in aromatic hydroxy compounds, sulfonamides and further plasticizers like lactams, lactones, alcohols etc.

WO 2015/127048 A1 discloses poly(trimethylene ether) glycol (PPD) as plasticizer for polyamides. The examples refer to poly(trimethylene ether) glycol (PPD) having a number average molecular weight of 255 and to poly(trimethylene ether) glycol benzoate (PPDB). Among commercial plasticizers N-butyl benzene sulfonamide (NBBS) and polyethylene glycol dibenzoate (Mₙ = 410) and poly(1,2-propylene glycol)dibenzoate (Mₙ = 400) are mentioned.

US 2,214,405 discloses monomeric amides, specifically sulfonamides, for example N-alkyl aryl sulfonamides as plasticizers for polyamides.

EP 1 873 200 A1 discloses different plasticizers for aliphatic polyamides, including p-alkyl benzene sulfonamides and guanidine-based compounds.

WO 2010/137725 A1 relates to a polyamide resin composition which is obtained by incorporating into a polyamide resin: an inorganic filler which has been surface-treated with an organopolysiloxane and in which the ratio of the amount of the organopolysiloxane used for the treatment to the specific surface area is in a specific range (A); and a polyalkylene glycol (B) having a number average molecular weight of 200 or more and 4,000 or less and/or a partial ester compound of a fatty acid with an alkylene oxide adduct of a polyhydric alcohol (C).

CN 107760022 A relates to a plasticized toughened nylon 6 material comprising, by mass, 73.6-84.5% of nylon 6, 10-15% of a toughening agent, 10-15% of a plasticizer, 0.2-0.6% of a heat stabilizer and 0.3-0.8% of a lubricant. The toughening agent is a maleic anhydride grafted polyolefin toughening agent, the plasticizer is a mixture of lactam compounds and polyethylene glycol, the thermal stabilizer is a mixture of a phenolic antioxidant and a thioester antioxidant, and the lubricant is montan wax. Based on the traditional toughened nylon 6, a third component plasticizer is used so that the plasticized toughened nylon 6 material greatly reduces the percentage of the toughening agent, retains high toughness of the nylon 6 material, greatly improves the flowability of the nylon 6 material and widens an application range of the nylon 6 material.

US 2015/051329 A1 relates to a polymer composition, comprising an effective amount of plasticizer in polyamide base polymer, wherein the plasticizer comprises an aromatic ester of poly(trimethylene ether) glycol with a number average molecular weight of 1000 or less.

Most of the above-mentioned compounds are toxic, for example benzene sulfonamide. Lactams like caprolactam lead to significant emissions during the processing of the molding composition and from the final molded parts.

The object underlying the present invention is to provide a plasticizer for polyamides which has high plasticizing efficiency, low migration in the polyamide and is not problematic with regard to the GHS (Globally Harmonized System of Classification and Labelling of Chemicals) rating.

The object is achieved according to the present invention by a thermoplastic molding composition, comprising
a) 39.9 to 99.9 wt% of at least one thermoplastic polyamide as component A,
b) 0.1 to 10 wt% of at least one plasticizer of the general formula (1)

   R₁-O-(CH₂CH₂-O-)ₙR₂ (1)

   with n = 1 to 4 R₁, R₂ independently H, C₁₋₁₂-alkyl, phenyl or tolyl,
   having a boiling point of more than 250 °C, as component B,
c) 0 to 45 wt% of at least one elastomeric polymer as component C,
d) 0 to 60 wt% of at least one fibrous and/or particulate filler as component D,
e) 0 to 25 wt% of further additives as component E,
wherein the total of wt% of components A to E is 100 wt%.

The object is furthermore achieved by the use of a compound of the general formula (1)

R₁-O-(CH₂CH₂-O-)ₙR₂ (1)

with n = 1 to 4 R₁, R₂ independently H, C₁₋₁₂-alkyp, phenyl or tolyl,
having a boiling point of more than 250 °C as plasticizer for thermoplastic polyamides.

The object is furthermore achieved by process for preparing the above thermoplastic molding composition by mixing the components A to E.

The object is furthermore achieved by the use of the thermoplastic molding composition for producing fibers, foils and moldings, and by the fibers, foils and moldings made of the thermoplastic molding composition.

According to the present invention it was found that (poly)ethylene glycols are very efficient plasticizers for polyamides. They are significantly more efficient in decreasing the tensile modulus of polyamide molding compositions than the known compounds, specifically the sulfonamides like N-(2-hydroxypropyl)benzene sulfonamide or caprolactam or lauryllactam. Furthermore, they do not leach out of the molding composition and moldings.

Thus, the present invention is based on the combination of components A and B or the use of component B as plasticizer in polyamides.

Preferably, the amount of lactam in thermoplastic molding compositions according to the present invention is less than 3 wt.%, more preferably less than 2 wt.%, based on the total amount of the thermoplastic molding composition (which is 100 wt.%).

The number average molecular weight as well as the weight average molecular weight (Mₙ, M_{w}) and polydispersity data of compounds employed in the molding composition can be obtained using gel permeation chromatography (GPC) in hexafluoroisopropanol as solvent with PMMA calibration.

ISO norms refer to the year 2020 version.

This molecular weight determination can be employed for all components of the thermoplastic molding compositions according to the present invention.

The molding compositions of the invention comprise, as component A, from 39.9 to 99.9 wt%, preferably from 45 to 99.5 wt%, and in particular from 49 to 99.9 wt% of at least one thermoplastic polyamide.

If components C, D or E, or combinations thereof are present in the thermoplastic molding composition, the maximum amount of component A is decreased by the minimum amount of each of components C, D or E, or a combination thereof.

The polyamides of the molding compositions of the invention generally have an intrinsic viscosity of from 90 to 350 ml/g, preferably from 110 to 240 ml/g, determined in a 0.5% strength by weight solution in 96% strength by weight sulfuric acid at 25 °C according to ISO 307, unless indicated otherwise.

Preference is given to semicrystalline or amorphous resins with a molecular weight (weight average) of at least 5000, described by way of example in the following US patents: 2 071 250, 2 071 251, 2 130 523, 2 130 948, 2 241 322, 2 312 966, 2 512 606, and 3 393 210.

Examples of these are polyamides that derive from lactams having from 7 to 13 ring members, e.g. polycaprolactam, polycaprylolactam, and polylaurolactam, and also polyamides obtained via reaction of dicarboxylic acids with diamines.

Dicarboxylic acids which may be used are alkanedicarboxylic acids having from 6 to 12, in particular from 6 to 10 carbon atoms, and aromatic dicarboxylic acids. Merely as examples, those that may be mentioned here are adipic acid, azelaic acid, sebacic acid, dodecanedioic acid and terephthalic and/or isophthalic acid.

Particularly suitable diamines are alkanediamines having from 6 to 12, in particular from 6 to 8 carbon atoms, and also m-xylylenediamine, di(4-aminophenyl)methane, di(4-aminocyclohexyl)methane, 2,2-di(4-aminophenyl)propane, 2,2-di(4-aminocyclohexyl)propane, and 1,5-diami-no-2-methylpentane.

Preferred polyamides are polyhexamethyleneadipamide, polyhexamethylenesebacamide, and polycaprolactam, and also nylon-6/6,6 copolyamides, in particular having a proportion of from 5 to 95 wt% of caprolactam units (e.g. Ultramid^{®} C31 from BASF SE).

Other suitable polyamides are obtainable from ω-aminoalkylnitriles, e.g. aminocapronitrile (PA 6) and adipodinitrile with hexamethylenediamine (PA 66) via what is known as direct polymerization in the presence of water, for example as described in DE-A 10313681, EP-A 1198491 and EP 922065.

Mention may also be made of polyamides obtainable, by way of example, via condensation of 1 ,4-diaminobutane with adipic acid at an elevated temperature (nylon-4,6). Preparation processes for polyamides of this structure are described by way of example in EP-A 38 094, EP-A 38 582, and EP-A 39 524.

Other suitable examples are polyamides obtainable via copolymerization of two or more of the abovementioned monomers, and mixtures of two or more polyamides in any desired mixing ratio. Particular preference is given to mixtures of nylon-6,6 with other polyamides, in particular blends of nylon-6 and nylon-66, and to nylon-6/6,6 copolyamides and nylon-6,6/6 copolyamides.

Other copolyamides which have proven particularly advantageous are semiaromatic copolyamides, such as PA 6/6T and PA 66/6T, where the triamine content of these is less than 0.5 wt%, preferably less than 0.3 wt% (see EP-A 299 444). Other polyamides resistant to high temperatures are known from EP-A 19 94 075 (PA6T/6I/MXD6).

The processes described in EP-A 129 195 and 129 196 can be used to prepare the preferred semiaromatic copolyamides with low triamine content.

The following list, which is not comprehensive, comprises the polyamides A) mentioned and other polyamides A) for the purposes of the invention, and the monomers comprised:
AB polymers:

| | |
|---|---|
| PA 4 | Pyrrolidone |
| PA 6 | ε-Caprolactam |
| PA 7 | Ethanolactam |
| PA 8 | Caprylolactam |
| PA 9 | 9-Aminopelargonic acid |
| PA 11 | 11-Aminoundecanoic acid |
| PA 12 | Laurolactam |

AA/BB polymers:

| | |
|---|---|
| PA 46 | Tetramethylenediamine, adipic acid |
| PA 66 | Hexamethylenediamine, adipic acid |
| PA 69 | Hexamethylenediamine, azelaic acid |
| PA 610 | Hexamethylenediamine, sebacic acid |
| PA 612 | Hexamethylenediamine, decanedicarboxylic acid |
| PA 613 | Hexamethylenediamine, undecanedicarboxylic acid |
| PA 1212 | 1,12-Dodecanediamine, decanedicarboxylic acid |
| PA 1313 | 1,13-Diaminotridecane, undecanedicarboxylic acid |
| PA 6T | Hexamethylenediamine, terephthalic acid |
| PA MXD6 | m-Xylylenediamine, adipic acid |

AA/BB polymers:

| | |
|---|---|
| PA 6I | Hexamethylenediamine, isophthalic acid |
| PA 6-3-T | Trimethylhexamethylenediamine, terephthalic acid |
| PA 6/6.36 | (see below) |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 61/6T | (see PA 6I and PA 6T) |
| PA PACM 12 | Diaminodicyclohexylmethane, laurolactam |
| PA 6I/6T/PACM | as PA 6I/6T + diaminodicyclohexylmethane |
| PA 12/MACMI | Laurolactam, dimethyldiaminodicyclohexylmethane, isophthalic acid |
| PA 12/MACMT | Laurolactam, dimethyldiaminodicyclohexylmethane, terephthalic acid |
| PA PDA-T | Phenylenediamine, terephthalic acid |

Preferred are PA 6, PA 66, PA 6/66, PA 66/6, PA 12, PA 6.10, PA 6T/6, PA 6I/6T, PA 6T/6I, PA 9T, PA 4T and copolyamides produced by polymerization of the components
A') 15% to 84% by weight of at least one lactam,
B') 16% to 85% by weight of a monomer mixture (M) comprising the components
   B1') at least one C₃₂-C₄₀-dimer acid and
   B2') at least one C₄-C₁₂-diamine,
wherein the percentages by weight of the components A') and B') are in each case based on the sum of the percentages by weight of the components A') and B'), specifically PA 6/6.36.

Most preferred are PA 6, PA 66, PA 6/66 and PA 66/6 as well as PA 6/6.36.

Suitable copolyamides are constructed from:
A1) 20.0 to 90.0 wt% of units derived from terephthalic acid and hexamethylenediamine,
A2) 0 to 50.0 wt% of units derived from ε-caprolactam,
A3) 0 to 80.0 wt% of units derived from adipic acid and hexamethylenediamine,
A4) 0 to 40.0 wt% of further polyamide-forming monomers,
wherein the proportion of component A2) or A3) or A4), or mixtures thereof is at least 10.0 wt%.

Component A1) comprises 20.0 to 90.0 wt% of units derived from terephthalic acid and hexamethylenediamine.

In addition to the units derived from terephthalic acid and hexamethylenediamine, the copolyamides optionally comprise units derived from ε-caprolactam and/or units derived from adipic acid and hexamethylenediamine and/or units derived from further polyamide-forming monomers.

Aromatic dicarboxylic acids A4) comprise 8 to 16 carbon atoms. Suitable aromatic dicarboxylic acids include, for example, isophthalic acid, substituted terephthalic and isophthalic acids, such as 3-t-butylisophthalic acid, polycyclic dicarboxylic acids, for example 4,4'- and 3,3'-diphenyldicarboxylic acid, 4,4'- and 3,3'-diphenylmethanedicarboxylic acid, 4,4'- and 3,3'-sulfodiphenylcarboxylic acid, 1,4- or 2,6-naphthalenedicarboxylic acid, phenoxyterephthalic acid, isophthalic acid being particularly preferred.

Further polyamide-forming monomers A4) may be derived from dicarboxylic acids having 4 to 16 carbon atoms and aliphatic or cycloaliphatic diamines having 4 to 16 carbon atoms, and also from aminocarboxylic acids/corresponding lactams having 7 to 12 carbon atoms. Examples of suitable monomers of these types mention are suberic acid, azelaic acid and sebacic acid as representatives of aliphatic dicarboxylic acids, 1,4-butanediamine, 1,5-pentanediamine, piperazine, 4,4'-diaminodicyclohexylmethane, 2,2-(4,4'-diaminodicyclohexyl)propane and 3,3'-dimethyl-4,4'-diaminodicyclohexylmethane or meta-xylylenediamine as representatives of diamines and caprolactam, enantholactam, ω-aminoundecanoic acid and laurolactam as representatives of lactams/aminocarboxylic acids.

Suitable such copolyamides are more particularly elucidated in DE-A-10 2009 011 668.

As component A the thermoplastic molding materials can comprise at least one copolyamide produced by polymerization of the components
A') 15% to 84% by weight of at least one lactam,
B') 16% to 85% by weight of a monomer mixture (M) comprising the components
   B1') at least one C₃₂-C₄₀-dimer acid and
   B2') at least one C₄-C₁₂-diamine,
wherein the percentages by weight of the components A') and B') are in each case based on the sum of the percentages by weight of the components A') and B').

In the context of the present invention the terms "component A')" and "at least one lactam" are used synonymously and therefore have the same meaning.

The same applies for the terms "component B')" and "monomer mixture (M)". These terms are likewise used synonymously in the context of the present invention and therefore have the same meaning.

According to the invention the at least one copolyamide is produced by polymerization of 15% to 84% by weight of the component A') and 16% to 85% by weight of the component B'), preferably by polymerization of 40% to 83% by weight of the component A') and 17% to 60% by weight of the component B') and especially preferably by polymerization of 60% to 80% by weight of the component A') and 20% to 40% by weight of the component B'), wherein the percentages by weight of the components A') and B') are in each based on the sum of the percentages by weight of the components A') and B').

The sum of the percentages by weight of the components A') and B') is preferably 100% by weight.

It will be appreciated that the weight percentages of the components A') and B') relate to the weight percentages of the components A') and B') prior to the polymerization, i.e. when the components A') and B') have not yet reacted with one another. During the polymerization of the components A') and B') the weight ratio of the components A') and B') may optionally change.

According to the invention the at least one copolyamide is produced by polymerization of the components A') and B'). The polymerization of the components A') and B') is known to those skilled in the art. The polymerization of the components A') with B') is typically a condensation reaction. During the condensation reaction the component A') reacts with the components B1') and B2') present in the component B') and optionally with the component B3') described hereinbelow which may likewise be present in the component B'). This causes amide bonds to form between the individual components. During the polymerization the component A') is typically at least partially in open chain form, i.e. in the form of an amino acid.

The polymerization of the components A') and B') may take place in the presence of a catalyst. Suitable catalysts include all catalysts known to those skilled in the art which catalyze the polymerization of the components A') and B'). Such catalysts are known to those skilled in the art. Preferred catalysts are phosphorus compounds, for example sodium hypophosphite, phosphorous acid, triphenylphosphine or triphenyl phosphite.

The polymerization of the components A') and B') forms the at least one copolyamide which therefore comprises units derived from the component A') and units derived from the component B'). Units derived from the component B') comprise units derived from the components B1') and B2') and optionally from the component B3').

The polymerization of the components A') and B') forms the copolyamide as a copolymer. The copolymer may be a random copolymer. It may likewise be a block copolymer.

Formed in a block copolymer are blocks of units derived from the component B') and blocks of units derived from the component A'). These appear in alternating sequence. In a random copolymer units derived from the component A') alternate with units derived from the component B'). This alternation is random. For example two units derived from the component B') may be followed by one unit derived from the component A') which is followed in turn by a unit derived from the component B') and then by a unit comprising three units derived from the component A').

It is preferable when the at least one copolyamide is a random copolymer.

Production of the at least one copolyamide preferably comprises steps of:
I) polymerizing the components A') and B') to obtain at least a first copolyamide,
II) pelletizing the at least one first copolyamide obtained in step I) to obtain at least one pelletized copolyamide,
III) extracting the at least one pelletized copolyamide obtained in step II) with water to obtain at least one extracted copolyamide,
IV) drying the at least one extracted copolyamide obtained in step III) at a temperature (TT) to obtain the at least one copolyamide,
IV) drying the at least one extracted copolyamide obtained in step III) at a temperature (TT) to obtain the at least one copolyamide.

The polymerization in step I) may be carried out in any reactor known to those skilled in the art. Preference is given to stirred tank reactors. It is also possible to use auxiliaries known to those skilled in the art, for example defoamers such as polydimethylsiloxane (PDMS), to improve reaction management.

In step II) the at least one first copolyamide obtained in step I) may be pelletized by any methods known to those skilled in the art, for example by strand pelletization or underwater pelletization.

The extraction in step III) may be effected by any methods known to those skilled in the art.

During the extraction in step III) byproducts typically formed during the polymerization of the components A') and B') in step I) are extracted from the at least one pelletized copolyamide.

In step IV) the at least one extracted copolyamide obtained in step III) is dried. Processes for drying are known to those skilled in the art. According to the invention the at least one extracted copolyamide is dried at a temperature (T_{T}). The temperature (T_{T}) is preferably above the glass transition temperature (T_{G(C)}) of the at least one copolyamide and below the melting temperature (T_{m(c)}) of the at least one copolyamide.

The drying in step IV) is typically carried out for a period in the range from 1 to 100 hours, preferably in the range from 2 to 50 hours and especially preferably in the range from 3 to 40 hours.

It is thought that the drying in step IV) further increases the molecular weight of the at least one copolyamide.

The at least one copolyamide - without addition of component B - typically has a glass transition temperature (T_{G(C)}). The glass transition temperature (T_{G(C)}) is for example in the range from 20 °C to 50 °C, preferably in the range from 23 °C to 47 °C and especially preferably in the range from 25 °C to 45 °C determined according to ISO 11357-2:2014.

In the context of the present invention the glass transition temperature (T_{G(C)}) of the at least one copolyamide is based, in accordance with ISO 11357-2:2014, on the glass transition temperature (T_{G(C)}) of the dry copolyamide.

In the context of the present invention "dry" is to be understood as meaning that the at least one copolyamide comprises less than 1% by weight, preferably less than 0.5% by weight and especially preferably less than 0.1% by weight of water based on the total weight of the at least one copolyamide. "Dry" is more preferably to be understood as meaning that the at least one copolyamide comprises no water and most preferably that the at least one copolyamide comprises no solvent.

In addition, the at least one copolyamide typically has a melting temperature (T_{M(C)}). The melting temperature (T_{M(C)}) of the at least one copolyamide is, for example, in the range from 150 to 210 °C, preferably in the range from 160 to 205 °C and especially preferably in the range from 160 to 200 °C determined according to ISO 11357-3:2014.

The at least one copolyamide generally has a viscosity number (VN(c)) in the range from 150 to 300 ml/g determined in a 0.5% by weight solution of the at least one copolyamide in a mixture of phenol/o-dichlorobenzene in a weight ratio of 1 : 1.

It is preferable when the viscosity number (VN_{(C)}) of the at least one copolyamide is in the range from 160 to 290 mL/g and particularly preferably in the range from 170 to 280 mL/g determined in a 0.5% by weight solution of the at least one copolyamide in a mixture of phenol/o-dichlorobenzene in a weight ratio of 1 : 1.

### Component A')

According to the invention the component A') is at least one lactam.

In the context of the present invention "at least one lactam" is understood as meaning either precisely one lactam or a mixture of 2 or more lactams.

Lactams are known per se to those skilled in the art. Preferred according to the invention are lactams having 4 to 12 carbon atoms.

In the context of the present invention "lactams" are to be understood as meaning cyclic amides having preferably 4 to 12 carbon atoms, particularly preferably 5 to 8 carbon atoms, in the ring.

Suitable lactams are for example selected from the group consisting of 3-aminopropanolactam (propio-3-lactam; β-lactam; β-propiolactam), 4-aminobutanolactam (butyro-4-lactam; γ-lactam; γ-butyrolactam), aminopentanolactam (2-piperidinone; δ-lactam; δ-valerolactam), 6-aminohexanolactam (hexano-6-lactam; ε-lactam; ε-caprolactam), 7-aminoheptanolactam (heptano-7-lactam; ζ-lactam; ζ-heptanolactam), 8-aminooctanolactam (octano-8-lactam; η-lactam; η-octanolactam), 9-aminononanolactam (nonano-9-lactam; 0-lactam; θ-nonanolactam), 10-aminodecanolactam (decano-10-lactam; ω-decanoiactam), 11-aminoundecanolactam (undecano-11-lactam; ω-undecanoiactam) and 12-aminododecanolactam (dodecano-12-lactam; ω-dodecanolactam).

The present invention therefore also provides a process where the component A') is selected from the group consisting of 3-aminopropanolactam, 4-aminobutanolactam, 5-aminopentanolactam, 6-aminohexanolactam, 7-aminoheptanolactam, 8-aminooctanolactam, 9-aminononanolactam, 10-aminodecanolactam, 11-aminoundecanolactam and 12-aminododecanolactam.

The lactams may be unsubstituted or at least monosubstituted. If at least monosubstituted lactams are used, the nitrogen atom and/or the ring carbon atoms thereof may bear one, two, or more substituents selected independently of one another from the group consisting of C₁- to C₁₀-alkyl, C₅- to C₆-cycloalkyl, and C₅- to C₁₀-aryl.

Suitable C₁- to C₁₀-alkyl substituents are, for example, methyl, ethyl, propyl, isopropyl, n-butyl, sec-butyl, and tert-butyl. A suitable C₅- to C₆-cycloalkyl substituent is for example cyclohexyl. Preferred C₅- to C₁₀-aryl substituents are phenyl or anthranyl.

It is preferable to employ unsubstituted lactams, γ-lactam (γ-butyrolactam), δ-lactam (δ-valerolactam) and ε-lactam (ε-caprolactam) being preferred. Particular preference is given to δ-lactam (δ-valerolactam) and ε-lactam (ε-caprolactam), ε-caprolactam being especially preferred.

### Monomer mixture (M)

According to the invention the component B') is a monomer mixture (M). The monomer mixture (M) comprises the components B1'), at least one C₃₂-C₄₀-dimer acid, and B2'), at least one C₄-C₁₂-diamine.

In the context of the present invention a monomer mixture (M) is to be understood as meaning a mixture of two or more monomers, wherein at least components B1') and B2') are present in the monomer mixture (M).

In the context of the present invention the terms "component B1')" and "at least one C₃₂-C₄₀-dimer acid" are used synonymously and therefore have the same meaning. The same applies for the terms "component B2')" and "at least one C₄-C₁₂-diamine". These terms are likewise used synonymously in the context of the present invention and therefore have the same meaning.

The monomer mixture (M) comprises, for example, in the range from 45 to 55 mol% of the component B1') and in the range from 45 to 55 mol% of the component B2') in each case based on the sum of the mole percentages of the components B1') and B2'), preferably based on the total amount of substance of the monomer mixture (M).

It is preferable when the component B') comprises in the range from 47 to 53 mol% of component B1') and in the range from 47 to 53 mol% of component B2') in each case based on the sum of the mole percentages of the components B1') and B2'), preferably based on the total amount of substance of the component B').

It is particularly preferable when the component B') comprises in the range from 49 to 51 mol% of the component B1') and in the range from 49 to 51 mol% of the component B2') in each case based on the sum total of the mole percentages of the components B1') and B2'), preferably based on the total amount of substance of the component B').

The mole percentages of the components B1') and B2') present in the component B') typically sum to 100 mol%.

The component B') may additionally comprise a component B3'), at least one C₄-C₂₀-diacid.

In the context of the present invention, the terms "component B3')" and "at least one C₄-C₂₀-diacid" are used synonymously and therefore have the same meaning.

When the component B') additionally comprises the component B3') it is preferable when component B') comprises in the range from 25 to 54.9 mol% of the component B1'), in the range from 45 to 55 mol% of the component B2') and in the range from 0.1 to 25 mol% of the component B3') in each case based on the total amount of substance of the component B').

It is particularly preferable when the component B') then comprises in the range from 13 to 52.9 mol% of the component B1'), in the range from 47 to 53 mol% of the component B2') and in the range from 0.1 to 13 mol% of the component B3') in each case based on the total amount of substance of the component B').

It is most preferable when the component B') then comprises in the range from 7 to 50.9 mol% of the component B1'), in the range from 49 to 51 mol% of the component B2') and in the range from 0.1 to 7 mol% of the component B3') in each case based on the total amount of substance of the component B').

When component B') additionally comprises the component B3') the mole percentages of the components B1'), B2') and B3') typically sum to 100 mol%.

The monomer mixture (M) may further comprise water.

The components B1') and B2') and optionally B3') of the component B') can react with one another to obtain amides. This reaction is known per se to those skilled in the art. The component B') may therefore comprise components B1'), B2') and optionally B3') in fully reacted form, in partially reacted form or in unreacted form. It is preferable when the component B') comprises the components B1'), B2') and optionally B3') in unreacted form.

In the context of the present invention "in unreacted form" is thus to be understood as meaning that the component B1') is present as the at least one C₃₂-C₄₀-dimer acid and the component B2') is present as the at least one C₄-C₁₂-diamine and optionally the component B3') is present as the at least one C₄-C₂₀-diacid.

If the components B1') and B2') and optionally B3') have at least partly reacted the components B1') and B2') and any B3') are thus at least partially in amide form.

### Component B1')

According to the invention the component B1') is at least one C₃₂-C₄₀-dimer acid.

In the context of the present invention "at least one C₃₂-C₄₀-dimer acid" is to be understood as meaning either precisely one C₃₂-C₄₀-dimer acid or a mixture of two or more C₃₂-C₄₀-dimer acids.

Dimer acids are also referred to as dimer fatty acids. C₃₂-C₄₀-dimer acids are known per se to those skilled in the art and are typically produced by dimerization of unsaturated fatty acids. This dimerization may be catalyzed by argillaceous earths for example.

Suitable unsaturated fatty acids for producing the at least one C₃₂-C₄₀-dimer acid are known to those skilled in the art and are for example unsaturated C₁₆-fatty acids, unsaturated C₁₈-fatty acids and unsaturated C₂₀-fatty acids.

It is therefore preferable when the component B1') is produced from unsaturated fatty acids selected from the group consisting of unsaturated C₁₆-fatty acids, unsaturated C₁₈-fatty acids and unsaturated C₂₀-fatty acids, wherein the unsaturated C₁₈-fatty acids are particularly preferred.

A suitable unsaturated C₁₆-fatty acid is palmitoleic acid ((9Z)-hexadeca-9-enoic acid) for example.

Suitable unsaturated C₁₈-fatty acids are for example selected from the group consisting of petroselic acid ((6Z)-octadeca-6-enoic acid), oleic acid ((9Z)-octadeca-9-enoic acid), elaidic acid ((9E)-octadeca-9-enoic acid), vaccenic acid ((11E)-octadeca-11-enoic acid), linoleic acid ((9Z,12Z)-octadeca-9,12-dienoic acid), α-linolenic acid ((9Z,12Z,15Z)-octadeca-9,12,15-trienoic acid), γ-linolenic acid ((6Z,9Z,12Z)-octadeca-6,9,12-trienoic acid), calendulic acid ((8E,10E,12Z)-octadeca-8,10,12-trienoic acid), punicic acid ((9Z,11E,13Z)-octadeca-9,11,13-trienoic acid), α-eleostearic acid ((9Z,11E,13E)-octadeca-9,11,13-trienoic acid) and β-eleostearic acid ((9E, 11 E, 13E)-octadeca-9, 11, 13-trienoic acid). Particular preference is given to unsaturated C₁₈-fatty acids selected from the group consisting of petroselic acid ((6Z)-octadeca-6-enoic acid), oleic acid ((9Z)-octadeca-9-enoic acid), elaidic acid ((9E)-octadeca-9-enoic acid), vaccenic acid ((11E)-octadeca-11-enoic acid), linoleic acid ((9Z,12Z)-octadeca-9,12-dienoic acid).

Suitable unsaturated C₂₀-fatty acids are for example selected from the group consisting of gado-leic acid ((9Z)-eicosa-9-enoic acid), ecosenoic acid ((11Z)-eicosa-11-enoic acid),
arachidonic acid ((5Z,8Z,11Z,14Z)-eicosa-5,8,11,14-tetraenoic acid) and timnodonic acid ((5Z,8Z,11Z,14Z,17Z)-eicosa-5,8,11,14,17-pentaenoic acid).

The component B1') is especially preferably at least one C₃₆-dimer acid.

The at least one C₃₆-dimer acid is preferably produced from unsaturated C₁₈-fatty acids. It is particularly preferable when the C₃₆-dimer acid is produced from
C₁₈-fatty acids selected from the group consisting of petroselic acid ((6Z)-octadeca-6-enoic acid), oleic acid ((9Z)-octadeca-9-enoic acid), elaidic acid ((9E)-octadeca-9-enoic acid), vaccenic acid ((11E)-octadeca-11-enoic acid) and linoleic acid ((9Z,12Z)-octadeca-9,12-dienoic acid).

Production of the component B1') from unsaturated fatty acids may also form trimer acids and residues of unconverted unsaturated fatty acid may also remain.

The formation of trimer acids is known to those skilled in the art.

According to the invention the component B1') preferably comprises not more than 0.5% by weight of unreacted unsaturated fatty acid and not more than 0.5% by weight of trimer acid, particularly preferably not more than 0.2% by weight of unreacted unsaturated fatty acid and not more than 0.2% by weight of trimer acid, in each case based on the total weight of component B1').

Dimer acids (also known as dimerized fatty acids or dimer fatty acids) are thus to be understood as meaning generally, and especially in the context of the present invention, mixtures produced by oligomerization of unsaturated fatty acids. They are producible for example by catalytic dimerization of plant-derived unsaturated fatty acids, wherein the starting materials employed are in particular unsaturated C₁₆- to C₂₀-fatty acids. The bonding proceeds primarily by the Diels-Alder mechanism, and results, depending on the number and position of the double bonds in the fatty acids used to produce the dimer acids, in mixtures of primarily dimeric products having cycloaliphatic, linear aliphatic, branched aliphatic, and also C₆-aromatic hydrocarbon groups between the carboxyl groups. Depending on the mechanism and/or any subsequent hydrogenation, the aliphatic radicals may be saturated or unsaturated and the proportion of aromatic groups may also vary. The radicals between the carboxylic acid groups then comprise 32 to 40 carbon atoms for example. Production preferably employs fatty acids having 18 carbon atoms so that the dimeric product thus has 36 carbon atoms. The radicals which join the carboxyl groups of the dimer fatty acids preferably comprise no unsaturated bonds and no aromatic hydrocarbon radicals.

In the context of the present invention production thus preferably employs C₁₈-fatty acids. It is particularly preferable to employ linolenic, linoleic and/or oleic acid.

Depending on reaction management the abovedescribed oligomerization affords mixtures which comprise primarily dimeric, but also trimeric, molecules and also monomeric molecules and other by-products. Purification by distillation is customary. Commercial dimer acids generally comprise at least 80% by weight of dimeric molecules, up to 19% by weight of trimeric molecules, and at most 1% by weight of monomeric molecules and of other by-products.

It is preferable to use dimer acids that consist to an extent of at least 90% by weight, preferably to an extent of at least 95% by weight, very particularly preferably to an extent of at least 98% by weight, of dimeric fatty acid molecules.

The proportions of monomeric, dimeric, and trimeric molecules and of other by-products in the dimer acids may be determined by gas chromatography (GC), for example. The dimer acids are converted to the corresponding methyl esters by the boron trifluoride method (cf. DIN EN ISO 5509) before GC analysis and then analyzed by GC.

In the context of the present invention it is thus a fundamental feature of "dimer acids" that production thereof comprises oligomerization of unsaturated fatty acids. This oligomerization forms predominantly, i.e. preferably to an extent of at least 80% by weight, particularly preferably at least 90% by weight, very particularly preferably at least 95% by weight and in particular at least 98% by weight, dimeric products. The fact that the oligomerization thus forms predominantly dimeric products comprising precisely two fatty acid molecules justifies this designation which is in any case commonplace. An alternative expression for the relevant term "dimer acids" is thus "mixture comprising dimerized fatty acids".

The dimer acids to be used are obtainable as commercial products. Examples include Radiacid 0970, Radiacid 0971, Radiacid 0972, Radiacid 0975, Radiacid 0976, and Radiacid 0977 from Oleon, Pripol 1006, Pripol 1009, Pripol 1012, and Pripol 1013 from Croda, Empol 1008, Empol 1012, Empol 1061, and Empol 1062 from BASF SE, and Unidyme 10 and Unidyme TI from Arizona Chemical.

The component B1') has an acid number in the range from 190 to 200 mg KOH/g for example.

### Component B2')

According to the invention the component B2') is at least one C₄-C₁₂-diamine.

In the context of the present invention "at least one C₄-C₁₂-diamine" is to be understood as meaning either precisely one C₄-C₁₂-diamine or a mixture of two or more C₄-C₁₂-diamines.

In the context of the present compound, "C₄-C₁₂-diamine" is to be understood as meaning aliphatic and/or aromatic compounds having four to twelve carbon atoms and two amino groups (-NH₂ groups). The aliphatic and/or aromatic compounds may be unsubstituted or additionally at least monosubstituted. If the aliphatic and/or aromatic compounds are additionally at least monosubstituted, they may bear one, two or more substituents that do not take part in the polymerization of the components A') and B'). Such substituents are for example alkyl or cycloalkyl substituents. These are known per se to those skilled in the art. The at least one C₄-C₁₂-diamine is preferably unsubstituted.

Suitable components B2') are for example selected from the group consisting of 1,4-diaminobutane (butane-1,4-diamine; tetramethylenediamine; putrescine), 1,5-diaminopentane (pentamethylenediamine; pentane-1,5-diamine; cadaverine), 1,6-diaminohexane (hexamethylenediamine; hexane-1,6-diamine), 1,7-diaminoheptane, 1,8-diaminooctane, 1,9-diaminononane, 1,10-diaminodecane (decamethylenediamine), 1,11-diaminoundecane (undecamethylenediamine) and 1,12-diaminododecane (dodecamethylenediamine).

It is preferable when the component B2') is selected from the group consisting of tetramethylenediamine, pentamethylenediamine, hexamethylenediamine, decamethylenediamine and dodecamethylenediamine.

### Component B3')

According to the invention the component B3') optionally present in the component B') is at least one C₄-C₂₀-diacid.

In the context of the present invention, "at least one C₄-C₂₀-diacid" is to be understood as meaning either precisely one C₄-C₂₀-diacid or a mixture of two or more C₄-C₂₀-diacids.

In the context of the present invention "C₄-C₂₀-diacid" is to be understood as meaning aliphatic and/or aromatic compounds having two to eighteen carbon atoms and two carboxyl groups (-COOH groups). The aliphatic and/or aromatic compounds may be unsubstituted or additionally at least monosubstituted. If the aliphatic and/or aromatic compounds are additionally at least monosubstituted, they may bear one, two or more substituents that do not take part in the polymerization of components A') and B'). Such substituents are for example alkyl or cycloalkyl substituents. These are known to those skilled in the art. Preferably, the at least one C₄-C₂₀-diacid is unsubstituted.

Suitable components B3') are for example selected from the group consisting of butanedioic acid (succinic acid), pentanedioic acid (glutaric acid), hexanedioic acid (adipic acid), heptanedioic acid (pimelic acid), octanedioic acid (suberic acid), nonanedioic acid (azelaic acid), decanedioic acid (sebacic acid), undecanedioic acid, dodecanedioic acid, tridecanedioic acid, tetradecanedioic acid and hexadecanedioic acid.

It is preferable when the component B3') is selected from the group consisting of pentanedioic acid (glutaric acid), hexanedioic acid (adipic acid), decanedioic acid (sebacic acid) and dodecanedioic acid.

It is particularly preferable when the component C) is PA6/6.36, preferably having a melting point of 190 to 210 °C, specifically having a melting point of 195 to 200 °C, more specifically 196 to 199 °C, and/or a (polymerized) caprolactam content of 60 to 80 wt%, more preferably 65 to 75 wt%, specifically 67 to 70 wt%, the remainder being PA 6.36 units derived from hexamethylene diamine and C₃₆-diacid.

As component B the molding compositions of the invention comprise 0.1 to 10 wt%, preferably 0.5 to 5 wt%, more preferably 1 to 4 wt% of at least one plasticizer of the general formula (1).

Rᵢ-O-(CH₂CH₂-O-)ₙR₂ (1)

with n = 1 to 4 R₁, R₂ independently H, C₁₋₁₂-alkyl, phenyl or tolyl,
having a boiling point of more than 250 °C.

Preferably, component B has a boiling point of at least 290 °C, more preferably of at least 300°C.

Component B is based on ethylene glycol or polyethylene glycols.

When a single compound of general formula (1) is employed, n is an integer. When mixtures of different compounds of general formula (1) with different values for n are employed, n denotes the number average value of the ethylene glycol units contained in the compound. In this case, n can be any number in the range of from 1 to 4

In a further embodiment, in the above formula (1) the numeral n is 1 to 4.

Most preferably, the plasticizer of general formula (1) is based on triethylene glycol, tetraethylene glycol, or mixtures thereof. Most preferred is tetraethylene glycol.

The ethylene glycol or polyethylene glycol can have one or two hydroxyl end groups. It is also possible that one or both of the hydroxyl groups are capped with ether groups. In this case, R₁ and R₂ are independently C₁₋₁₂-alkyl, phenyl or tolyl. More preferred are C₁₋₈-alkyl, specifically C₁₋₃-alkyl. In the most preferred case, R₁ and R₂ are hydrogen.

In a further embodiment, the plasticizer of general formula (1) has a molecular weight of less than 200 g/mol, preferably less than 195 g/mol.

The most preferred individual compound employed as plasticizer is tetraethylene glycol which has the formula HO-(CH₂CH₂-O-)₄H, having a molecular weight of 194.23 g/mol and a boiling point 327 °C.

The tetraethylene glycol can be used in admixture with triethylene glycol and/or pentaethylene glycol. Therefore, n is preferably from 3.8 to 4.2.

Tetraethylene glycol is non-toxic and has a high plasticizing efficiency. When compared with sulfonamides and lactams, only half the amount of tetraethylene glycol is necessary to achieve the same plasticizing effect and the same decrease of the glass transition temperature. Therefore, the plasticizers of component B can be employed in significantly lower amounts than the known plasticizers like N-(2-hydroxypropyl)benzene sulfonamide and caprolactam or lau-ryllactam.

The compounds of component B are highly efficient for reducing the tensile modulus of moldings made from the thermoplastic molding composition.

Most preferably, the amount of component B is 1 to 5 wt%, for example 1 to 4 wt% or 2 to 5 wt%. If the amount is 2 to 5 wt%, the maximum amount of component A is 98 wt%.

As component C, the molding compositions of the present invention can comprise 0 to 45 wt%, preferably 0 to 40 wt% of at least one elastomeric polymer.

If the elastic polymer is present, the minimum amount is preferably 1 wt%, more preferably 2 wt%, most preferably 5 wt%. Thus, if the elastomeric polymer of component C is present in the molding compositions, the amount is preferably 1 to 45 wt%, more preferably 2 to 40 wt%, most preferably 5 to 40 wt%. In this case the maximum amount of component A is decreased by the minimum amount of component C.

Component C can be selected from all elastomeric polymers, impact modifiers, elastomers or rubbers which are suitable for polyamide molding compositions.

Preferably component C is selected from
b1) copolymers of ethylene with at least one comonomer selected from
   C₃₋₁₂-olefins, C₁₋₁₂-alkyl (meth)acrylates, (meth)acrylic acid and maleic anhydride as component B1),
b2) polyethylene or polypropylene as component B2),
wherein components B1) and B2) may also be additionally grafted with maleic anhydride, preferably from ethylene-propylene rubbers, ethylene-propylene-diene-rubbers, ethylene-butyl acrylate copolymers, copolymers of ethylene and/or propylene and maleic anhydride and mixtures thereof.

These elastomeric polymers (also often termed impact modifiers, elastomers, or rubbers) are very generally copolymers preferably composed of at least two of the following monomers: ethylene, propylene, butadiene, isobutene, isoprene, chloroprene, vinyl acetate, styrene, acrylonitrile and acrylates and/or methacrylates having from 1 to 18 carbon atoms in the alcohol component.

Polymers of this type are described, for example, in Houben-Weyl, Methoden der organischen Chemie, vol. 14/1 (Georg-Thieme-Verlag, Stuttgart, Germany, 1961), pages 392 to 406, and in the monograph by C.B. Bucknall, Toughened Plastics (Applied Science Publishers, London, UK, 1977).

Some preferred types of such elastomers are described below.

Preferred types of such elastomers are those known as ethylene-propylene (EPM) and ethylene-propylene-diene (EPDM) rubbers.

EPM rubbers generally have practically no residual double bonds, whereas EPDM rubbers may have from 1 to 20 double bonds per 100 carbon atoms.

Examples which may be mentioned of diene monomers for EPDM rubbers are conjugated dienes, such as isoprene and butadiene, non-conjugated dienes having from 5 to 25 carbon atoms, such as 1,4-pentadiene, 1,4-hexadiene, 1,5-hexadiene, 2,5-dimethyl-1 ,5-hexadiene and 1,4-octadiene, cyclic dienes, such as cyclopentadiene, cyclohexadienes, cyclooctadienes and dicyclopentadiene, and also alkenylnorbornenes, such as 5-ethylidene-2-norbornene, 5-butylidene-2-norbornene, 2-methallyl-5-norbornene and 2-isopropenyl-5-norbornene, and tricycledienes, such as 3-methyltricyclo[5.2.1.0^{2,6}]-3,8-decadiene, and mixtures of these. Preference is given to 1,5-hexadiene, 5-ethylidenenorbornene and dicyclopentadiene. The diene content of the EPDM rubbers is preferably from 0.5 to 50 wt%, in particular from 1 to 8 wt%, based on the total weight of the rubber.

EPM rubbers and EPDM rubbers may preferably also have been grafted with reactive carboxylic acids or with derivatives of these. Examples of these are acrylic acid, methacrylic acid and derivatives thereof, e.g. glycidyl (meth)acrylate, and also maleic anhydride.

Copolymers of ethylene with acrylic acid and/or methacrylic acid and/or with the esters of these acids are another group of preferred rubbers. The rubbers may also comprise dicarboxylic acids, such as maleic acid and fumaric acid, or derivatives of these acids, e.g. esters and anhydrides, and/or monomers comprising epoxy groups. These dicarboxylic acid derivatives or monomers comprising epoxy groups are preferably incorporated into the rubber by adding to the monomer mixture monomers comprising dicarboxylic acid groups and/or epoxy groups and having the general formulae I or II or III or IV

R¹C(COOR²)=C(COOR³)R⁴ (I)

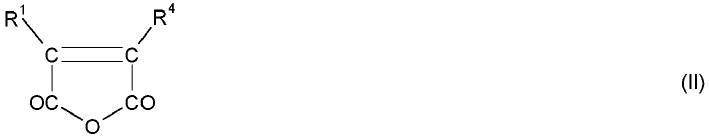

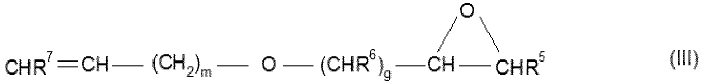

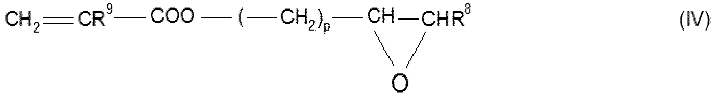

where R¹ to R⁹ are hydrogen or alkyl groups having from 1 to 6 carbon atoms, and m is a whole number from 0 to 20, g is a whole number from 0 to 10 and p is a whole number from 0 to 5.

The radicals R¹ to R⁹ are preferably hydrogen, where m is 0 or 1 and g is 1. The corresponding compounds are maleic acid, fumaric acid, maleic anhydride, allyl glycidyl ether and vinyl glycidyl ether.

Preferred compounds of the formulae I, II and IV are maleic acid, maleic anhydride and (meth)acrylates comprising epoxy groups, such as glycidyl acrylate and glycidyl methacrylate, and the esters with tertiary alcohols, such as tert-butyl acrylate. Although the latter have no free carboxy groups, their behavior approximates to that of the free acids and they are therefore termed monomers with latent carboxy groups.

The copolymers are advantageously composed of from 50 to 98 wt% of ethylene, from 0.1 to 20 wt% of monomers comprising epoxy groups and/or methacrylic acid and/or monomers comprising anhydride groups, the remaining amount being (meth)acrylates.

Particular preference is given to copolymers composed of
- from 50 to 98 wt%, in particular from 55 to 95 wt% of ethylene,
- from 0.1 to 40 wt%, in particular from 0.3 to 20 wt% of glycidyl acrylate and/or glycidyl methacrylate, (meth)acrylic acid and/or maleic anhydride, and
- from 1 to 45 wt%, in particular from 5 to 40 wt% of n-butyl acrylate and/or 2-ethylhexyl acrylate.

Other preferred (meth)acrylates are the methyl, ethyl, propyl, isobutyl and tert-butyl esters.

Comonomers which may be used alongside these are vinyl esters and vinyl ethers.

The ethylene copolymers described above may be prepared by processes known per se, preferably by random copolymerization at high pressure and elevated temperature. Appropriate processes are well-known.

Other preferred elastomers are emulsion polymers whose preparation is described, for example, by Blackley in the monograph "Emulsion Polymerization". The emulsifiers and catalysts which can be used are known per se.

In principle it is possible to use homogeneously structured elastomers or else those with a shell structure. The shell-type structure is determined by the sequence of addition of the individual monomers. The morphology of the polymers is also affected by this sequence of addition.

Monomers which may be mentioned here, merely as examples, for the preparation of the rubber fraction of the elastomers are acrylates, such as, for example, n-butyl acrylate and 2-ethylhexyl acrylate, corresponding methacrylates, butadiene and isoprene, and also mixtures of these. These monomers may be copolymerized with other monomers, such as, for example, styrene, acrylonitrile, vinyl ethers and with other acrylates or methacrylates, such as methyl methacrylate, methyl acrylate, ethyl acrylate or propyl acrylate.

The soft or rubber phase (with a glass transition temperature of below 0 °C) of the elastomers may be the core, the outer envelope or an intermediate shell (in the case of elastomers whose structure has more than two shells). Elastomers having more than one shell may also have more than one shell composed of a rubber phase.

If one or more hard components (with glass transition temperatures above 20 °C) are involved, besides the rubber phase, in the structure of the elastomer, these are generally prepared by polymerizing, as principal monomers, styrene, acrylonitrile, methacrylonitrile, α-methylstyrene, p-methylstyrene, or acrylates or methacrylates, such as methyl acrylate, ethyl acrylate or methyl methacrylate. Besides these, it is also possible to use relatively small proportions of other comonomers.

It has proven advantageous in some cases to use emulsion polymers which have reactive groups at their surfaces. Examples of groups of this type are epoxy, carboxy, latent carboxy, amino and amide groups, and also functional groups which may be introduced by concomitant use of monomers of the general formula 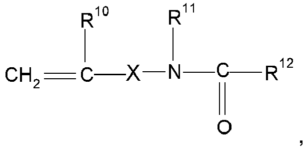 where the substituents can be defined as follows:
- R¹⁰: is hydrogen or a C₁-C₄-alkyl group,
- R¹¹: is hydrogen, a C₁-C₈-alkyl group or an aryl group, in particular phenyl,
- R¹²: is hydrogen, a C₁-C₁₀-alkyl group, a C₆-C₁₂-aryl group, or -OR¹³,
- R¹³: is a C₁-C₈-alkyl group or a C₆-C₁₂-aryl group, which can optionally have substitution by groups that comprise O or by groups that comprise N,
- X: is a chemical bond, a C₁-C₁₀-alkylene group, or a C₆-C₁₂-arylene group, or

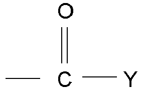

- Y: is O-Z or NH-Z, and
- Z: is a C₁-C₁₀-alkylene or C₆-C₁₂-arylene group.

The graft monomers described in EP-A 208 187 are also suitable for introducing reactive groups at the surface.

Other examples which may be mentioned are acrylamide, methacrylamide and substituted acrylates or methacrylates, such as (N-tert-butylamino)ethyl methacrylate, (N,N-dimethylamino)ethyl acrylate, (N,N-dimethylamino)methyl acrylate and (N,N-diethylamino)ethyl acrylate.

The particles of the rubber phase may also have been crosslinked. Examples of crosslinking monomers are 1,3-butadiene, divinylbenzene, diallyl phthalate and dihydrodicyclopentadienyl acrylate, and also the compounds described in EP-A 50 265.

It is also possible to use the monomers known as graft-linking monomers, i.e. monomers having two or more polymerizable double bonds which react at different rates during the polymerization. Preference is given to the use of compounds of this type in which at least one reactive group polymerizes at about the same rate as the other monomers, while the other reactive group (or reactive groups), for example, polymerize(s) significantly more slowly. The different polymerization rates give rise to a certain proportion of unsaturated double bonds in the rubber. If another phase is then grafted onto a rubber of this type, at least some of the double bonds present in the rubber react with the graft monomers to form chemical bonds, i.e. the phase grafted on has at least some degree of chemical bonding to the graft base.

Examples of graft-linking monomers of this type are monomers comprising allyl groups, in particular allyl esters of ethylenically unsaturated carboxylic acids, for example allyl acrylate, allyl methacrylate, diallyl maleate, diallyl fumarate and diallyl itaconate, and the corresponding monoallyl compounds of these dicarboxylic acids. Besides these there is a wide variety of other suitable graft-linking monomers. For further details reference may be made here, for example, to US patent 4 148 846.

The proportion of these crosslinking monomers in the impact-modifying polymer is generally up to 5 wt%, preferably not more than 3 wt%, based on the impact-modifying polymer.

Some preferred emulsion polymers are listed below. Mention may first be made here of graft polymers with a core and with at least one outer shell, and having the following structure:

| Type | Monomers for the core | Monomers for the envelope |
|---|---|---|
| I | 1,3-butadiene, isoprene, n-butyl acrylate, ethylhexyl acrylate, or a mixture of these | styrene, acrylonitrile, methyl methacrylate |
| II | as I, but with concomitant use of crosslinking agents | as I |
| III | as I or II | n-butyl acrylate, ethyl acrylate, methyl acrylate, 1,3-butadiene, isoprene, ethylhexyl acrylate |
| IV | as I or II | as I or III, but with concomitant use of monomers having reactive groups, as described herein |
| V | styrene, acrylonitrile, methyl methacrylate, or a mixture of these | first envelope composed of monomers as described under I and II for the core, second envelope as described under I or IV for the envelope |

Instead of graft polymers whose structure has more than one shell, it is also possible to use homogeneous, i.e. single-shell, elastomers composed of 1,3-butadiene, isoprene and n-butyl acrylate or of copolymers of these. These products, too, may be prepared by concomitant use of crosslinking monomers or of monomers having reactive groups.

Examples of preferred emulsion polymers are n-butyl acrylate-(meth)acrylic acid copolymers, n-butyl acrylate/glycidyl acrylate or n-butyl acrylate/glycidyl methacrylate copolymers, graft polymers with an inner core composed of n-butyl acrylate or based on butadiene and with an outer envelope composed of the abovementioned copolymers, and copolymers of ethylene with comonomers which supply reactive groups.

The elastomers described may also be prepared by other conventional processes, e.g. by suspension polymerization.

Preference is also given to silicone rubbers, as described in DE-A 37 25 576, EP-A 235 690, DE-A 38 00 603 and EP-A 319 290.

It is, of course, also possible to use mixtures of the types of rubber listed above.

Preferably the elastomer, is selected from
b1) copolymers of ethylene with at least one comonomer selected from C₃₋₁₂-olefins, C₁₋₁₂-alkyl (meth)acrylates, (meth)acrylic acid, maleic anhydride, as component B1),
b2) polyethylene or polypropylene as component B2),
wherein components B1) and B2) may also be additionally grafted with maleic anhydride.

Component B1) may comprise one or more different comonomers, preferably 1 to 3 different copolymers, particularly preferably one or two different comonomers. The C₃₋₁₂-olefins are preferably terminal, linear C₃₋₁₂-olefins, particularly preferably C₃₋₈-olefins. Examples of suitable olefins are propylene, 1-butene, 1-pentene, 1-hexene, 1-heptene and 1-octene.

According to one embodiment, component B) is not polyethylene. According to one embodiment of the invention, component B2) is not polyethylene. However, in this embodiment, component B2) can be polyethylene grafted with maleic anhydride. It is also possible to employ mixtures of polyethylene with the other elastomers mentioned as components B1) and B2).

The C₁₋₁₂-alkyl (meth)acrylates comprise C₁₋₁₂-alkyl radicals, preferably C₂₋₆-alkyl radicals, such as methyl, ethyl, propyl, butyl, pentyl, hexyl, ethylhexyl radicals. Alkyl acrylates are preferably concerned.

In the copolymers of component B1) the proportion of ethylene base units is preferably 1% to 99% by weight, particularly preferably 60% to 98% by weight, especially preferably 84% to 96% by weight.

The following preferred amounts apply for the comonomers:

| | |
|---|---|
| C₃₋₂-olefins: | preferably 99% to 1% by weight, particularly preferably 40% to 10% by weight, |
| C₁₋₁₂-alkyl (meth)acrylates: | preferably 40% to 2% by weight, particularly preferably 30% to 5% by weight, |
| (Meth)acrylic acid: | preferably 40% to 2% by weight, particularly preferably 30% to 5% by weight, |

| | |
|---|---|
| Maleic anhydride: | preferably 3% to 0.01% by weight, particularly preferably 2% to 0.1% by weight, |

The total amount of comonomers is preferably in the range from 1% to 99% by weight, particularly preferably 2% to 40% by weight.

The copolymers of component B1) may be random or block copolymers. The former consist of a crystallizing and thus physically crosslinking main polymer (polyethylene) whose degree of crystallization is reduced by a comonomer randomly incorporated along the chain so that the crystallites in the finished molding material are no longer in direct contact. They then act as insulated crosslinking points as in conventional elastomers.

In block copolymers the hard and soft segments in a molecule are highly distinct. In thermoplastic elastomers the material demixes into a continuous phase and a discontinuous phase below a certain temperature. As soon as the latter falls below its glass temperature it in turn acts as a crosslinking point.

The copolymer of component B1) may also be grafted with maleic anhydride. The maleic anhydride used for the grafting is preferably employed in an amount of 5% to 0.005% by weight, particularly preferably 3% to 0.01% by weight, based on the copolymer of the component B1). In the grafted copolymer of the component B1) the maleic anhydride proportion is preferably in the range from 2% to 0.1% by weight based on the ungrafted copolymer of the component B1).

Component B1) preferably has a melt flow index (MVR) (190 °C/2.16 kg, according to ISO1133) value of 0.1 to 20 cm³/10 min, particularly preferably 0.1 to 15 cm³/10 min.

Employable alternatively or in addition to the component B1) as component B2) is polyethylene or polypropylene or a mixture of both. This component B2) may also be grafted with maleic anhydride, wherein the proportion of maleic anhydride based on the polyolefin is 5% to 0.005% by weight, particularly preferably 2% to 0.1% by weight.

Component B2) preferably has an MVR (190 °C/2.16 kg, according to ISO1133) value of 0.1 to 20 cm³/10 min, particularly preferably 0.1 to 15 cm³/10 min.

The term "elastomer" describes the components B1) and B2) which may optionally be grafted with maleic anhydride. Thermoplastic elastomers (TPE) may preferably be concerned. At room temperature TPE exhibit behavior comparable to the classical elastomers but are plastically deformable when heated and thus exhibit thermoplastic behavior.

Also employable according to the invention are mixtures of the components B1) and B2). These are in particular elastomer alloys (polyblends).

The thermoplastic elastomers are usually copolymers comprising a "soft" elastomer component and a "hard" thermoplastic component. Their properties are thus between those of elastomers and thermoplastics.

Polyolefin elastomers (POE) are polymerized for example through the use of metallocene catalysts, examples including ethylene-propylene elastomers (EPR or EPDM).

The most common polyolefin elastomers are copolymers of ethylene and butene or ethylene and octene.

For further description of the elastomers suitable as component C) reference may also be made to US 5,482,997, US 5,602,200, US 4,174,358 and WO 2005/014278 A1.

Examples of suitable elastomers are obtainable for example from lyondellbasell under the designations Lucalen A2540D and Lucalen A2700M. Lucalen A2540D is a low density polyethylene comprising a butyl acrylate comonomer. It has a density of 0.923 g/cm³ and a Vicat softening temperature of 85 °C and a melting temperature of 103 °C at a butyl acrylate proportion of 6.5% by weight.

Lucalen A2700M is a low density polyethylene likewise comprising a butyl acrylate comonomer. It has a density of 0.924 g/cm³, a Vicat softening temperature of 60 °C and a melting temperature of 95 °C.

The polymer resin Exxelor^{™} VA 1801 from ExxonMobil is a semicrystalline ethylene copolymer functionalized with maleic anhydride by reactive extrusion and having an intermediate viscosity. The polymer backbone is fully saturated. The density is 0.880 g/cm³ and the proportion of maleic anhydride is typically in the range from 0.5% to 1.0% by weight.

As component D, the thermoplastic molding composition contains 0 to 60 wt%, preferably 0 to 50 wt%, more preferably 0 to 40 wt% of at least one fibrous and/or particulate filler.

Preferably, component D comprises glass fibers and is present in an amount of from 10 to 60 wt%, more preferably 15 to 50 wt%, most preferably 20 to 40 wt%.

If component D is present, the maximum amount of component A is decreased by the minimum amount of component D, so that the total amount of components A to E is still 100 wt%.

Fibrous or particulate fillers D that may be mentioned are carbon fibers, glass fibers, glass beads, amorphous silica, calcium silicate, calcium metasilicate, magnesium carbonate, kaolin, chalk, powdered quartz, mica, barium sulfate, and feldspar.

Preferred fibrous fillers that may be mentioned are carbon fibers, aramid fibers, and potassium titanate fibers, particular preference being given to glass fibers in the form of E glass. These can be used as rovings or in the commercially available forms of chopped glass.

The fibrous fillers may have been surface-pretreated with a silane compound to improve compatibility with the thermoplastic.

Suitable silane compounds have the general formula:

(X-(CH₂)ₙ)ₖ-Si-(O-CₘH₂ₘ₊₁)₄₋ₖ

where the definitions of the substituents are as follows: 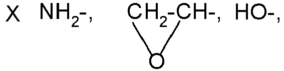
- n: is a whole number from 2 to 10, preferably 3 to 4,
- m: is a whole number from 1 to 5, preferably 1 to 2, and
- k: is a whole number from 1 to 3, preferably 1.

Preferred silane compounds are aminopropyltrimethoxysilane, aminobutyltrimethoxysilane, aminopropyltriethoxysilane and aminobutyltriethoxysilane, and also the corresponding silanes which comprise a glycidyl group as substituent X.

The amounts of the silane compounds generally used for surface-coating are from 0.01 to 2 wt%, preferably from 0.025 to 1.0 wt% and in particular from 0.05 to 0.5 wt% (based on component D).

Acicular mineral fillers are also suitable.

For the purposes of the invention, acicular mineral fillers are mineral fillers with strongly developed acicular character. An example is acicular wollastonite. The mineral preferably has an L/D (length to diameter) ratio of from 8:1 to 35:1, preferably from 8:1 to 11:1. The mineral filler may optionally have been pretreated with the abovementioned silane compounds, but the pretreatment is not essential.

Other fillers which may be mentioned are kaolin, calcined kaolin, wollastonite, talc and chalk, and also lamellar or acicular nanofillers, the amounts of these preferably being from 0.1 to 10%. Materials preferred for this purpose are boehmite, bentonite, montmorillonite, vermiculite, hectorite, and laponite. The lamellar nanofillers are organically modified by prior art methods, to give them good compatibility with the organic binder. Addition of the lamellar or acicular nanofillers to the inventive nanocomposites gives a further increase in mechanical strength.

As component E, the molding compositions of the present invention can contain 0 to 25 wt%, preferably 0 to 20 wt%, more preferably 0 to 15 wt% of further additives.

If further additives are employed, the minimum amount is preferably 0.1 wt%, more preferably 0.25 wt%, most preferably 0.5 wt%.

The thermoplastic molding compositions of the invention can comprise as component E conventional processing aids, further stabilizers, oxidation retarders, agents to counteract decomposition by heat and decomposition by ultraviolet light, lubricants and mold-release agents, colorants, such as dyes and pigments, nucleating agents, plasticizers, etc.

The molding compositions of the invention can comprise, as component E1, from 0.05 to 3% by weight, preferably from 0.1 to 1.5% by weight, and in particular from 0.1 to 1% by weight, of a lubricant.

Preference is given to the salts of Al, of alkali metals, or of alkaline earth metals, or esters or amides of fatty acids having from 10 to 44 carbon atoms, preferably having from 12 to 44 carbon atoms.

The metal ions are preferably alkaline earth metal and Al, particular preference being given to Ca or Mg.

Preferred metal salts are Ca stearate and Ca montanate, and also Al stearate.

It is also possible to use a mixture of various salts, in any desired mixing ratio.

The carboxylic acids can be monobasic or dibasic. Examples which may be mentioned are pel-argonic acid, palmitic acid, lauric acid, margaric acid, dodecanedioic acid, behenic acid, and particularly preferably stearic acid, capric acid, and also montanic acid (a mixture of fatty acids having from 30 to 40 carbon atoms).

The aliphatic alcohols can be monohydric to tetrahydric. Examples of alcohols are n-butanol, n-octanol, stearyl alcohol, ethylene glycol, propylene glycol, neopentyl glycol, pentaerythritol, preference being given to glycerol and pentaerythritol.

The aliphatic amines can be mono- to tribasic. Examples of these are stearylamine, ethylenediamine, propylenediamine, hexamethylenediamine, di(6-aminohexyl)amine, particular preference being given to ethylenediamine and hexamethylenediamine. Preferred esters or amides are correspondingly glycerol distearate, glycerol tristearate, ethylenediamine distearate, glycerol monopalmitate, glycerol trilaurate, glycerol monobehenate, and pentaerythritol tetrastearate.

It is also possible to use a mixture of various esters or amides, or of esters with amides in combination, in any desired mixing ratio.

As component E) the molding materials according to the invention can comprise preferably 0.01% to 3% by weight, particularly preferably 0.02% to 2% by weight, in particular 0.05% to 1.0% by weight, of at least one heat stabilizer based on the total weight of the composition.

The heat stabilizers are preferably selected from copper compounds, secondary aromatic amines, sterically hindered phenols, phosphites, phosphonites and mixtures thereof.

As component E, 0.05 to 3 wt%, preferably 0.1 to 2 wt%, in particular 0.1 to 1 wt% of at least one sterically hindered phenol antioxidant can be employed.

This component E preferably has a molecular weight of more than 500 g/mol, more preferably of more than 1000 g/mol. Additionally, component C should preferably exhibit a high thermal stability, e.g. maximum of 5% weight loss, more preferably maximum of 2% weight loss, measured under nitrogen at 300 °C within a TGA (thermogravimetric analysis) experiment (40 °C to 120 °C with 10 °C/min, isothermal the later temperature for 15 min followed by 120 °C to 600 °C at 20 °C/min).

Component E has preferably at least one, more preferably at least two phenol groups substituted by at least one branched C₃₋₁₂-alkyl group as sterically hindering group. The substituted phenol groups are covalently linked with the structure of component E.

Suitable sterically hindered phenols E are in principle all of the compounds which have a phenolic structure and which have at least one bulky group on the phenolic ring. A bulky group is for example a branched C₃₋₁₂-alkyl group, preferably a branched C₃₋₆-alkyl group, more preferably an isopropyl or tert.-butyl group.

It is preferable to use, for example, compounds of the formula 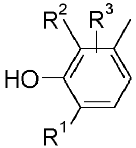 where:
R₁ and R₂ are an alkyl group, a substituted alkyl group, or a substituted triazole group, and where the radicals R₁ and R₂ may be identical or different, and R³ is an alkyl group, a substituted alkyl group, an alkoxy group, or a substituted amino group. The alkyl and alkoxy residues have preferably 1 to 12 carbon atoms, more preferably 1 to 6 carbon atoms. Substituents are preferably C₁₋₁₂-alkyl, more preferably C₁₋₆-alkyl, most preferably C₁₋₄-alkyl. At least one of R₁ to R³ is preferably a bulky group as defined above.

Antioxidants of the abovementioned type are described by way of example in DE-A 27 02 661 (US-A 4 360 617).

Another group of preferred sterically hindered phenols is provided by those derived from substituted phenylcarboxylic acids, in particular from substituted phenylpropionic acids, which preferably have at least one bulky group on the phenyl group. They contain at least one, preferably two covalently linked substituted phenylcarboxylic acid unit(s) in their structure, which preferably have at least one bulky group on the phenyl group.

Preferred phenylcarboxylic acids are phenyl-C₁₋₁₂-carboxylic acids, more preferably phenyl-C₂₋₆-carboxylic acids. The phenyl group is preferably a phenol group having at least one bulky group on the phenolic ring, as indicated above. Thus, the above-mentioned sterically hindered phenols are preferably covalently linked with a C₁₋₁₂-alkane carboxylic acid, more preferably a linear C₂₋₆-alkane carboxylic acid.

Particularly preferred compounds from this class are compounds of the formula 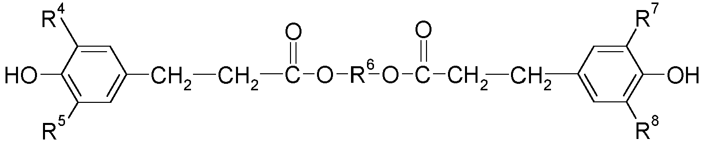 where R⁴, R⁵, R⁷, and R⁸, independently of one another, are C₁-C₈-alkyl groups which themselves may have substitution (at least one of these being a bulky group), and R⁶ is a divalent aliphatic radical which has from 1 to 10 carbon atoms and whose main chain may also have CO bonds. At least one of R⁴ to R⁸ is a bulky group as defined above.

Preferred compounds corresponding to these formulae are 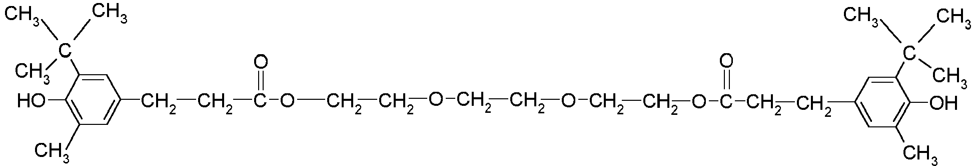 (Irganox^{®} 245 from BASF SE) 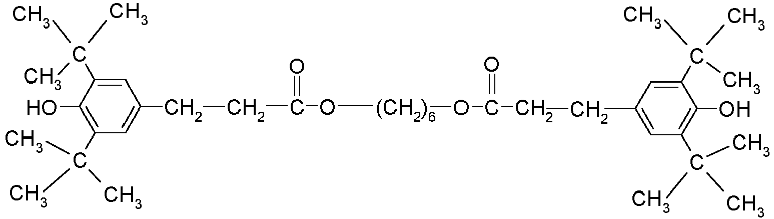 (Irganox^{®} 259 from BASF SE)

All of the following should be mentioned as examples of sterically hindered phenols:
2,2'-methylenebis(4-methyl-6-tert-butylphenol), 1,6-hexanediol bis[3-(3,5-di-tert-butyl-4-hydroxyphenyl)propionate], pentaerythrityl tetrakis[3-(3,5-di-tert-butyl-4-hydroxyphenyl)propionate] (Irganox^{®} 1010 from BASF SE), distearyl 3,5-di-tert-butyl-4-hydroxybenzylphosphonate, 2,6,7-trioxa-1-phosphabicyclo[2.2.2]oct-4-ylmethyl 3,5-di-tert-butyl-4-hydroxyhydrocinnamate, 3,5-ditert-butyl-4-hydroxyphenyl-3,5-distearylthiotriazylamine, 2-(2'-hydroxy-3'-hydroxy-3',5'-di-tert-butylphenyl)-5-chlorobenzotriazole, 2,6-di-tert-butyl-4-hydroxymethylphenol, 1,3,5-trimethyl-2,4,6-tris(3,5-di-tert-butyl-4-hydroxybenzyl)benzene, 4,4'-methylenebis(2,6-di-tert-butylphenol), 3,5-di-tert-butyl-4-hydroxybenzyldimethylamine.

Compounds which have proven particularly effective and which are therefore used with preference are 2,2'-methylenebis(4-methyl-6-tert-butylphenol), 1,6-hexanediol bis(3,5-di-tert-butyl-4-hydroxyphenyl)propionate (Irganox^{®} 259), pentaerythrityl tetrakis[3-(3,5-di-tert-butyl-4-hydroxyphenyl)propionate], and also N,N'-hexamethylenebis-3,5-di-tert-butyl-4-hydroxyhydrocinnamide (Irganox^{®} 1098), and the products Irganox^{®} 245 and Irganox^{®} 1010 described above from BASF SE, which have particularly good suitability.

In some instances, sterically hindered phenols having not more than one sterically hindered group in ortho-position with respect to the phenolic hydroxy group have proven particularly advantageous; in particular when assessing colorfastness on storage in diffuse light over prolonged periods.

Furthermore, it is advantageous to employ sterically hindered phenol antioxidants which also have a sufficiently high molecular weight, preferably of more than 500 g/mol and especially a molecular weight above 1000 g/mol. Furthermore, they preferably exhibit a high thermal stability measured by TGA (thermogravimetric analysis) of less than 2% degradation up until 300 °C under nitrogen atmosphere.

The molding compositions of the invention can comprise, as component E2, from 0.05 to 3% by weight, preferably from 0.1 to 1.5% by weight, and in particular from 0.1 to 1% by weight, of a copper stabilizer, preferably of a Cu(l) halide, in particular in a mixture with an alkali metal halide, preferably KI, in particular in the ratio 1:4, or of a sterically hindered phenol, or a mixture of these.

Preferred salts of monovalent copper used are cuprous acetate, cuprous chloride, cuprous bromide, and cuprous iodide. The materials comprise these in amounts of from 5 to 500 ppm of copper, preferably from 10 to 250 ppm, based on polyamide.

The advantageous properties are in particular obtained if the copper is present with molecular distribution in the polyamide. This is achieved if a concentrate comprising the polyamide, and comprising a salt of monovalent copper, and comprising an alkali metal halide in the form of a solid, homogeneous solution is added to the molding composition. By way of example, a typical concentrate is composed of from 79 to 95% by weight of polyamide and from 21 to 5% by weight of a mixture composed of copper iodide or copper bromide and potassium iodide. The copper concentration in the solid homogeneous solution is preferably from 0.3 to 3% by weight, in particular from 0.5 to 2% by weight, based on the total weight of the solution, and the molar ratio of cuprous iodide to potassium iodide is from 1 to 11.5, preferably from 1 to 5.

Suitable polyamides for the concentrate are homopolyamides and copolyamides, in particular nylon-6.

According to a preferred embodiment of the present invention, the molding compositions are free from copper, specifically from copper stabilizers, such as Cu/(I)halides, and combinations of Cu(I)halides with alkali metal halides.

More preferably, the thermoplastic molding compositions of the present inventions are metal halide-free. Metal halide-free systems, so-called electro-friendly systems, are of high interest, since electro-mobility, electrification and connectivity are an increasing trend in almost all industries.

Therefore, the thermoplastic molding composition is preferably free from metal halides, specifically Cu halides and alkali metal halides.

The molding compositions of the invention can comprise from 0.001 to 10 wt%, preferably from 0.05 to 5 wt%, in particular from 0.1 to 2.5 wt% of iron powder having a particle size of at most 10 µm (d₅₀ value). The iron powder is preferably obtainable via thermal decomposition of pentacarbonyl iron.

Iron occurs in a number of allotropes:
1. α-Fe (ferrite) forms space-centered cubic lattices, is magnetizable, dissolves a small amount of carbon, and occurs in pure iron up to 928 °C. At 770 °C (Curie temperature) it loses its ferromagnetic properties and becomes paramagnetic; iron in the temperature range from 770 to 928 °C is also termed β-Fe. At normal temperature and at a pressure of at least 13 000 MPa, α-Fe becomes what is known as ε-Fe with a reduction of about 0.20 cm³/mol in volume, whereupon density increases from 7.85 to 9.1 (at 20 000 MPa);
2. γ-Fe (austenite) forms face-centered cubic lattices, is nonmagnetic, dissolves a large amount of carbon, and is observable only in the temperature range from 928 to 1398 °C;
3. δ-Fe, space-centered, exists at from 1398 °C to the melting point of 1539 °C.

Metallic iron is generally silver-white, density 7.874 (heavy metal), melting point 1539 °C, boiling point 2880 °C; specific heat (from 18 to 100 °C) about 0.5 g⁻¹ K⁻¹, tensile strength from 220 to 280 N/mm². The values apply to chemically pure iron.

Industrial production of iron uses smelting of iron ores, iron slags, calcined pyrites, or blast-furnace dust, and resmelting of scrap and alloys.

The iron powder of the invention is produced via thermal decomposition of iron pentacarbonyl, preferably at temperatures of from 150 °C to 350 °C. The particles thus obtainable have a preferably spherical shape, therefore being spherical or almost spherical (another term used being spherolitic).

Preferred iron powder has the particle size distribution described below; particle size distribution here is determined by means of laser scattering in very dilute aqueous suspension (e.g. using a Beckmann LS13320). The particle size (and distribution) described hereinafter can optionally be obtained via grinding and/or sieving.

| | |
|---|---|
| dₓₓ here means that XX% of the total volume of the particles is smaller than the stated value. | |
| d₅₀ values: | at most 10 µm, preferably from 1.6 to 8 µm, in particular from 2.9 to 7.5 µm, very particularly from 3.4 to 5.2 µm |
| d₁₀ values: | preferably from 1 to 5 µm, in particular from 1 to 3 µm, and very particularly from 1.4 to 2.7 µm |
| d₉₀ values: | preferably from 3 to 35 µm, in particular from 3 to 12 µm, and very particularly from 6.4 to 9.2 µm. |

The iron powder preferably has iron content of from 97 to 99.8 g/100 g, preferably from 97.5 to 99.6 g/100 g. Content of other metals is preferably below 1000 ppm, in particular below 100 ppm, and very particularly below 10 ppm.

Fe content is usually determined via infrared spectroscopy.

C content is preferably from 0.01 to 1.2 g/100 g, preferably from 0.05 to 1.1 g/100 g, and in particular from 0.4 to 1.1 g/100 g. This C content in the preferred iron powders corresponds to that of powders which are not reduced using hydrogen after the thermal decomposition process.

The carbon content is usually determined by combustion of the sample in a stream of oxygen and then using IR to detect the resultant CO₂ gas (by means of a Leco CS230 or CS-mat 6250 from Juwe) by a method based on ASTM E1019.

Nitrogen content is preferably at most 1.5 g/100 g, preferably from 0.01 to 1.2 g/100 g.

Oxygen content is preferably at most 1.3 g/100 g, preferably from 0.3 to 0.65 g/100 g.

N and O are determined via heating of the specimen to about 2100 °C in a graphite furnace. The oxygen obtained from the specimen here is converted to CO and measured by way of an IR detector. The N liberated under the reaction conditions from the N-containing compounds is discharged with the carrier gas and detected and recorded by means of TCD (Thermal Conductivity Detector) (both methods based on ASTM E1019).

Tap density is preferably from 2.5 to 5 g/cm³, in particular from 2.7 to 4.4 g/cm³. This generally means the density when the powder is, for example, charged to the container and compacted by vibration. Iron powders to which further preference is given can have been surface-coated with iron phosphate, with iron phosphite, or with SiO₂.

BET surface area to DIN ISO 9277 is preferably from 0.1 to 10 m²/g, in particular from 0.1 to 5 m²/g, and preferably from 0.2 to 1 m²/g, and in particular from 0.4 to 1 m²/g.

In order to achieve particularly good dispersion of the iron particles, a masterbatch may be used, involving a polymer. Suitable polymers for this purpose are polyolefins, polyesters, or polyamides, and it is preferable here that the masterbatch polymer is the same as component A. The mass fraction of the iron in the polymer is generally from 15 to 80 wt%, preferably from 20 to 40 wt%.

UV stabilizers that may be mentioned, the amounts of which used are generally up to 2 wt%, based on the molding composition, are various substituted resorcinols, salicylates, benzotriazoles, and benzophenones. Nigrosine can also be employed.

Materials that can be added as colorants are inorganic pigments, such as titanium dioxide, ultramarine blue, iron oxide, and carbon black, and also organic pigments, such as phthalocyanines, quinacridones, perylenes, and also dyes, such as anthraquinones.

Materials that can be used as nucleating agents are sodium phenylphosphinate, aluminum oxide, silicon dioxide, and also preferably talc.

The thermoplastic molding compositions can furthermore contain flame retardants as component E.

As component E, the thermoplastic molding materials can comprise 1.0 to 10.0 wt%, preferably 2.0 to 6.0 wt%, in particular 3.0 to 5.0 wt%, of at least one phosphazene of general formula (IX) or (X) as flame retardant.

The minimum amount of this component E is at least 1.0 wt%, preferably 2.0 wt%, in particular 3.0 wt%.

The maximum amount of this component E is 10.0 wt%, preferably 6.0 wt%, particularly preferably 5.0 wt%.

"Phosphazenes" is to be understood as meaning cyclic phosphazenes of general formula (IX) 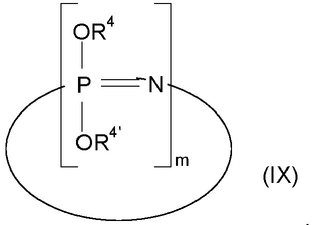 in which m is an integer from 3 to 25 and R⁴ and R⁴' are identical or different and represent C₁-C₂₀-alkyl-, C₆-C₃₀-aryl-, C₆-C₃₀-arylalkyl- or C₆-C₃₀-alkyl-substituted aryl or linear phosphazenes of general formula (X) 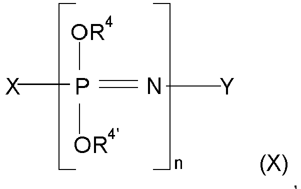 in which n represents 3 to 1000 and X represents -N = P(OPh)₃ or -N = P(O)OPh and Y represents -P(OPh)₄ or -P(O)(OPh)₂.

The production of such phosphazenes is described in EP-A 0 945 478.

Particular preference is given to cyclic phenoxyphosphazenes of formula P₃N₃C₃₆ of formula (XI) 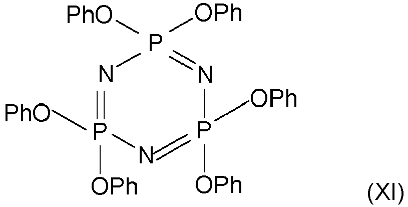 or linear phenoxyphosphazenes according to formula (XII)

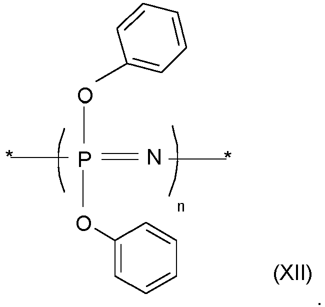

The phenyl radicals may optionally be substituted. Phosphazenes in the context of the present application are described in Mark, J. E., Allcock, H. R., West, R., Inorganic Polymers, Prentice Hall, 1992, pages 61 to 141.

Preferably employed as component E are cyclic phenoxyphosphazenes having at least three phenoxyphosphazene units. Corresponding phenoxyphosphazenes are described for example in US 2010/0261818 in paragraphs [0051] to [0053]. Reference may in particular be made to formula (I) therein. Corresponding cyclic phenoxyphosphazenes are furthermore described in EP-A-2 100 919, in particular in paragraphs [0034] to [0038] therein. Production may be effected as described in EP-A-2 100 919 in paragraph [0041]. In one embodiment of the invention the phenyl groups in the cyclic phenoxyphosphazene may be substituted by C₁₋₄-alkyl radicals. It is preferable when pure phenyl radicals are concerned.

For further description of the cyclic phosphazenes reference may be made to Römpp Chemie Lexikon, 9^{th} ed., keyword "phosphazenes". Production is effected for example via cyclophos-phazene which is obtainable from PCl₅ and NH₄Cl, wherein the chlorine groups in the cyclo-phosphazene have been replaced by phenoxy groups by reaction with phenol.

The cyclic phenoxy phosphazene compound may for example be produced as described in Allcock, H. R., Phosphorus-Nitrogen Compounds (Academic Press, 1972), and in Mark, J. E., Allcock, H. R., West, R., Inorganic Polymers (Prentice Hall, 1992).

Component E is preferably a mixture of cyclic phenoxyphosphazenes having three and four phenoxy phosphazene units. The weight ratio of rings comprising three phenoxyphosphazene units to rings comprising four phenoxyphosphazene units is preferably about 80:20. Larger rings of the phenoxyphosphazene units may likewise be present but in smaller amounts. Suitable cyclic phenoxyphosphazenes are obtainable from Fushimi Pharmaceutical Co., Ltd., under the name Rabitle^{®} FP-100. This is a matt-white/yellowish solid having a melting point of 110 °C, a phosphorus content of 13.4% and a nitrogen content of 6.0%. The proportion of rings comprising three phenoxyphosphazene units is at least 80.0 wt%.

The thermoplastic molding materials preferably can comprise 1.0 to 6.0 wt%, preferably 2.5 to 5.5 wt%, in particular 3.0 to 5.0 wt% of at least one aliphatic or aromatic ester of phosphoric acid or polyphosphoric acid as flame retardant.

For this reason especially solid, non-migrating phosphate esters having a melting point between 70 °C and 150 °C are preferred. This has the result that the products are easy to meter and exhibit markedly less migration in the molding material. Particularly preferred examples are the commercially available phosphate esters PX-200 (CAS: 139189-30-3) from Daihachi, or Sol-DP from ICL-IP. Further phosphate esters with appropriate substitution of the phenyl groups are conceivable when this allows the preferred melting range to be achieved. The general structural formula, depending on the substitution pattern in the ortho position or the para position on the aromatic ring, is as follows: 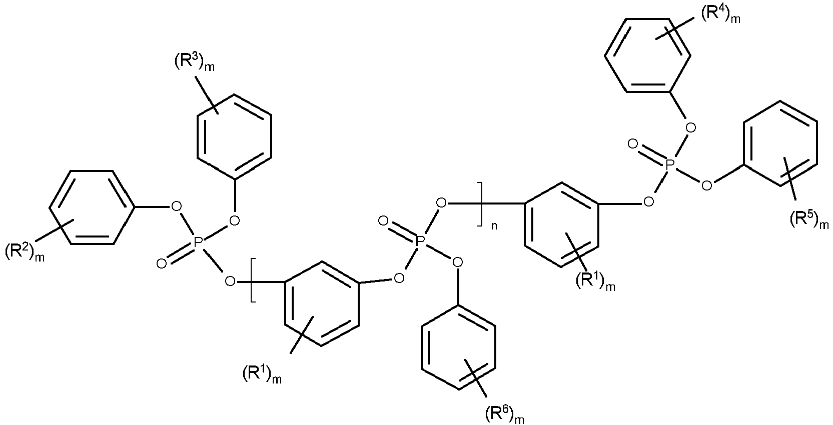 or 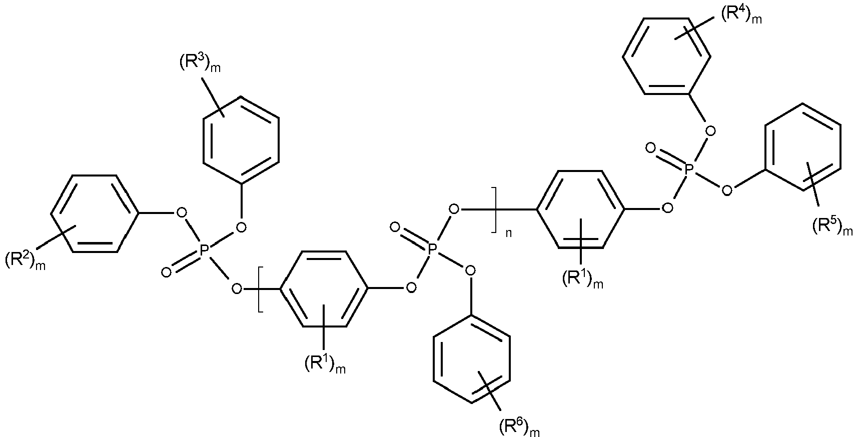 or 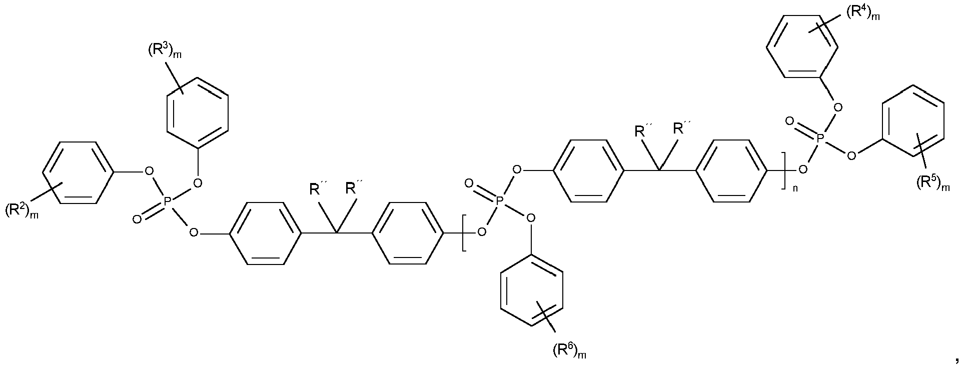 wherein
- R₁: = H, methyl, ethyl or isopropyl, but preferably H.
- n: = between 0 and 7, but preferably 0.
- R²⁻⁶: = H, methyl, ethyl or isopropyl, but preferably methyl. R⁶ is preferably identical to R⁴ and R⁵.
- m: = may be, but needs not be identical and is between 1, 2, 3, 4 and 5, but preferably 2.
- R": = may be H, methyl, ethyl or cyclopropyl, but preferably methyl and H.

PX-200 is given as a concrete example:

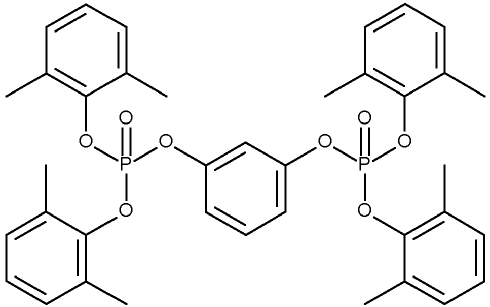

It is particularly preferable when at least one aromatic ester of polyphosphoric acid is employed. Such aromatic polyphosphates are obtainable for example from Daihachi Chemical under the name PX-200.

As component E, the thermoplastic molding materials according to the invention can comprise 5.0 to 30.0 wt%, preferably 10.0 to 25.0 wt%, in particular 12.0 to 20.0 wt%, for example about 16.0 wt%, of at least one metal phosphinate or phosphinic acid salt described hereinbelow as flame retardant.

Examples of preferred flame retardants of component E are metal phosphinates derived from hypophosphorous acid. A metal salt of hypophosphorous acid with Mg, Ca, Al or Zn as the metal may be employed for example. Particular preference is given here to aluminum hypophosphite.

Also suitable are phosphinic acid salts of formula (I) or/and diphosphinic acid salts of formula (II) or polymers thereof 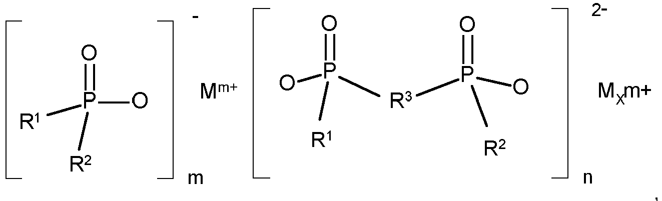 in which
- R₁, R₂: are identical or different and represent hydrogen, C₁-C₆-alkyl, linear or branched, and/or aryl;
- R³: represents C₁-C₁₀-alkylene, linear or branched, C₆-C₁₀-arylene, -alkylarylene or -aryl-alkylene;
- M: represents Mg, Ca, Al, Sb, Sn, Ge, Ti, Zn, Fe, Zr, Ce, Bi, Sr, Mn, Li, Na, K and/or a pro-tonated nitrogen base;
m = 1 to 4; n = 1 to 4; x = 1 to 4, preferably m = 3, x = 3.

Preferably, R₁, R₂ are identical or different and represent hydrogen, methyl, ethyl, n-propyl, isopropyl, n-butyl, tert.-butyl, n-pentyl and/or phenyl.

Preferably, R³ represents methylene, ethylene, n-propylene, isopropylene, n-butylene, tert-butylene, n-pentylene, n-octylene or n-dodecylene, phenylene or naphthylene; methylphenylene, ethylphenylene, tert-butylphenylene, methylnaphthylene, ethylnaphthylene or tert-butylnaph-thylene; phenylmethylene, phenylethylene, phenylpropylene or phenylbutylene.

Particularly preferably, R₁, R₂ are hydrogen, methyl, ethyl, and M is Al, particular preference is given to Al hypophosphite.

Production of the phosphinates is preferably effected by precipitation of the corresponding metal salts from aqueous solutions. However, the phosphinates may also be precipitated in the presence of a suitable inorganic metal oxide or sulfide as support material (white pigments, for example TiO₂, SnO₂, ZnO, ZnS, SiO₂). This accordingly affords surface-modified pigments which can be employed as laser-markable flame retardants for thermoplastic polyesters.

It is preferable when metal salts of substituted phosphinic acids are employed in which compared to hypophosphorous acid one or two hydrogen atoms have been replaced by phenyl, methyl, ethyl, propyl, isobutyl, isooctyl or radicals R'-CH-OH have been replaced by R'-hydrogen, phenyl, tolyl. The metal is preferably Mg, Ca, Al, Zn, Ti, Fe. Aluminum diethylphosphinate (DE-PAL) is particularly preferred.

For a description of phosphinic acid salts or diphosphinic acid salts reference may be made to DE-A 199 60 671 and also to DE-A 44 30 932 and DE-A 199 33 901.

Further flame retardants are, for example, halogen-containing flame retardants.

Suitable halogen-containing flame retardants are preferably brominated compounds, such as brominated diphenyl ether, brominated trimethylphenylindane (FR 1808 from DSB) tetrabromobisphenol A and hexabromocyclododecane.

Suitable flame retardants are preferably brominated compounds, such as brominated oligocar-bonates (BC 52 or BC 58 from Great Lakes, having the structural formula: 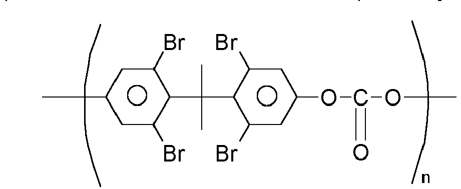 n < 3

Especially suitable are polypentabromobenzyl acrylates, where n > 4 (e.g. FR 1025 from ICL-IP having the formula:

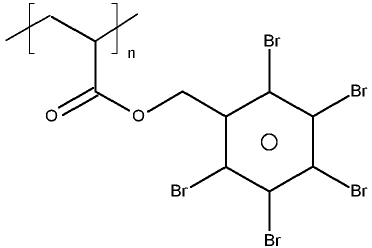

Preferred brominated compounds further include oligomeric reaction products (n > 3) of tetrabromobisphenol A with epoxides (e.g. FR 2300 and 2400 from DSB) having the formula:

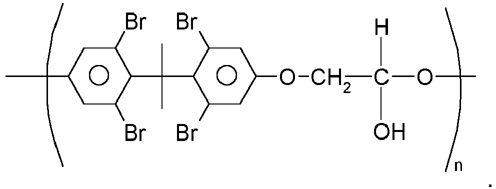

The brominated oligostyrenes preferably employed as flame retardants have an average degree of polymerization (number-average) between 3 and 90, preferably between 5 and 60, measured by vapor pressure osmometry in toluene. Cyclic oligomers are likewise suitable. In a preferred embodiment of the invention the brominated oligomeric styrenes have the formula I shown below in which R represents hydrogen or an aliphatic radical, in particular an alkyl radical, for example CH₂ or C₂H₅, and n represents the number of repeating chain building blocks. R₁ may be H or else bromine or else a fragment of a customary free radical former:

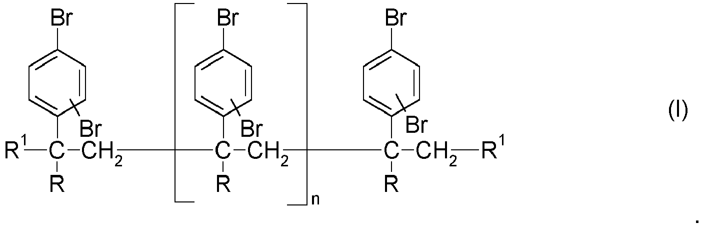

The value n may be 1 to 88, preferably 3 to 58. The brominated oligostyrenes comprise 40.0 to 80.0 wt%, preferably 55.0 to 70.0 wt%, of bromine. Preference is given to a product consisting predominantly of polydibromostyrene. The substances are meltable without decomposing, and soluble in tetrahydrofuran for example. Said substances may be produced either by ring bromination of - optionally aliphatically hydrogenated - styrene oligomers such as are obtained for example by thermal polymerization of styrene (according to DT-OS 25 37 385) or by free-radical oligomerization of suitable brominated styrenes. The production of the flame retardant may also be effected by ionic oligomerization of styrene and subsequent bromination. The amount of brominated oligostyrene necessary for endowing the polyamides with flame retardant properties depends on the bromine content. The bromine content in the molding materials according to the invention is from 2.0 to 30.0 wt%, preferably from 5.0 to 12.0 wt%.

The brominated polystyrenes according to the invention are typically obtained by the process described in EP-A 047 549:

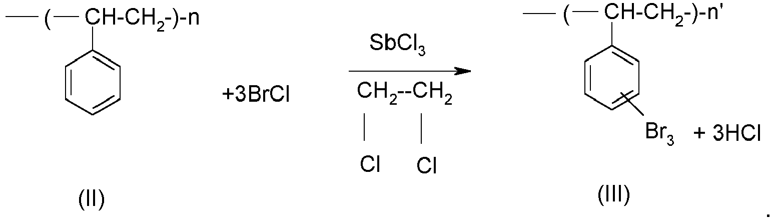

The brominated polystyrenes obtainable by this process and commercially available are predominantly ring-substituted tribrominated products. n' (see III) generally has values of 125 to 1500 which corresponds to a molecular weight of 42500 to 235000, preferably of 130000 to 135000.

The bromine content (based on the content of ring-substituted bromine) is generally at least 50.0 wt%, preferably at least 60.0 wt% and in particular 65.0 wt%.

The commercially available pulverulent products generally have a glass transition temperature of 160 °C to 200 °C and are for example obtainable under the names SAYTEX^{®} HP-7010 from Albemarle and Pyrocheck^{®} PB 68 from Ferro Corporation.

Mixtures of the brominated oligostyrenes with brominated polystyrenes may also be employed in the molding materials according to the invention, the mixing ratio being freely choosable.

Also suitable are chlorine-containing flame retardants, Declorane Plus^{®} from OxyChem being preferable.

Suitable halogen-containing flame retardants are preferably ring-brominated polystyrene, brominated polybenzyl acrylates, brominated bisphenol A epoxide oligomers or brominated bisphenol A polycarbonates.

In one embodiment of the invention no halogen-containing flame retardants are employed in the thermoplastic molding materials according to the invention.

A flame retardant melamine compound suitable as component E in the context of the present invention is a melamine compound which when added to glass fiber filled polyamide molding materials reduces flammability and influences fire behavior in a fire retarding fashion, thus resulting in improved properties in the UL 94 tests and in the glow wire test.

The melamine compound is for example selected from melamine borate, melamine phosphate, melamine sulfate, melamine pyrophosphate, melam, melem, melon or melamine cyanurate or mixtures thereof.

The melamine cyanurate preferentially suitable according to the invention is a reaction product of preferably equimolar amounts of melamine (formula I) and cyanuric acid/isocyanuric acid (formulae la and lb).

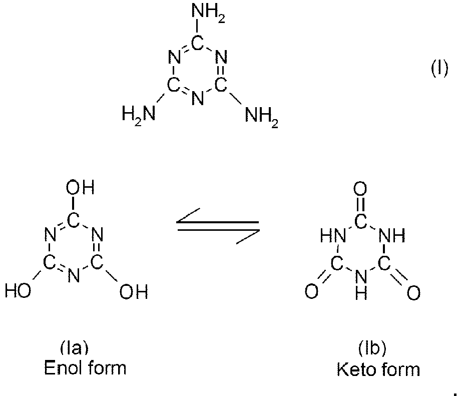

It is obtained for example by reaction of aqueous solutions of the starting compounds at 90 °C to 100 °C. The commercially available product is a white powder having an average grain size d₅₀ of 1.5 to 7 µm and a d₉₉ value of less than 50 µm.

Further suitable compounds (often also described as salts or adducts) are melamine sulfate, melamine, melamine borate, oxalate, phosphate prim., phosphate sec. and pyrophosphate sec., melamine neopentyl glycol borate. According to the invention the molding materials are preferably free from polymeric melamine phosphate (CAS no. 56386-64-2 or 218768-84-4).

This is to be understood as meaning melamine polyphosphate salts of a 1,3,5-triazine compound which have an average degree of condensation number n between 20 and 200 and a 1,3,5-triazine content of 1.1 to 2.0 mol of a 1,3,5-triazine compound selected from the group consisting of melamine, melam, melem, melon, ammeline, ammelide, 2-ureidomelamine, acetoguanamine, benzoguanamine and diaminophenyltriazine per mole of phosphorus atom. Preferably, the n-value of such salts is generally between 40 and 150 and the ratio of a 1,3,5-triazine compound per mole of phosphorus atom is preferably between 1.2 and 1.8. Furthermore, the pH of a 10 wt% aqueous slurry of salts produced according to EP-B1 095 030 will generally be more than 4.5 and preferably at least 5.0. The pH is typically determined by adding 25 g of the salt and 225 g of clean water at 25 °C into a 300 ml beaker, stirring the resultant aqueous slurry for 30 minutes and then measuring the pH. The abovementioned n-value, the number-average degree of condensation, may be determined by means of 31P solid-state NMR. J. R. van Wazer, C. F. Callis, J. Shoolery and R. Jones, J. Am. Chem. Soc., 78, 5715, 1956 discloses that the number of adjacent phosphate groups gives a unique chemical shift which permits clear distinction between orthophosphates, pyrophosphates, and polyphosphates.

Suitable guanidine salts are

| | CAS no. |
|---|---|
| g carbonate | 593-85-1 |
| g cyanurate prim. | 70285-19-7 |
| g phosphate prim. | 5423-22-3 |
| g phosphate sec. | 5423-23-4 |
| g sulfate prim. | 646-34-4 |
| g sulfate sec. | 594-14-9 |
| guanidine pentaerythritol borate | n.a. |
| guanidine neopentyl glycol borate | n.a. |
| and urea phosphate green | 4861-19-2 |
| urea cyanurate | 57517-11-0 |
| ammeline | 645-92-1 |
| ammelide | 645-93-2 |
| melem | 1502-47-2 |
| melon | 32518-77-7 |

In the context of the present invention "compounds" is to be understood as meaning not only for example benzoguanamine itself and the adducts/salts thereof but also the nitrogen-substituted derivatives and the adducts/salts thereof.

Also suitable are ammonium polyphosphate (NH₄PO₃)ₙ where n is about 200 to 1000, preferably 600 to 800, and tris(hydroxyethyl)isocyanurate (THEIC) of formula IV 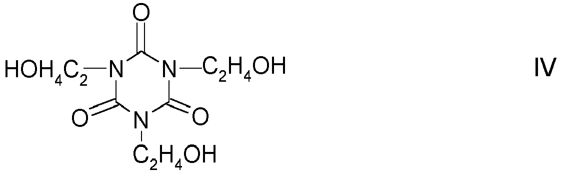 or the reaction products thereof with aromatic carboxylic acids Ar(COOH)ₘ which may optionally be present in a mixture with one another, wherein Ar represents a monocyclic, bicyclic or tricyclic aromatic six-membered ring system and m is 2, 3 or 4.

Examples of suitable carboxylic acids include phthalic acid, isophthalic acid, terephthalic acid, 1,3,5-benzenetricarboxylic acid, 1,2,4-benzenetricarboxylic acid, pyromellitic acid, mellophanic acid, prehnitic acid, 1-naphthoic acid, 2-naphthoic acid, naphthalenedicarboxylic acids, and anthracenecarboxylic acids.

Production is effected by reaction of the tris(hydroxyethyl)isocyanurate with the acids, the alkyl esters thereof or the halides thereof according to the processes in EP-A 584 567.

Such reaction products are a mixture of monomeric and oligomeric esters which may also be crosslinked. The degree of oligomerization is typically 2 to about 100, preferably 2 to 20. Preference is given to using mixtures of THEIC and/or reaction products thereof with phosphorus-containing nitrogen compounds, in particular (NH₄PO₃)ₙ or melamine pyrophosphate or polymeric melamine phosphate. The mixing ratio for example of (NH₄PO₃), to THEIC is preferably 90.0 to 50.0:10.0 to 50.0, in particular 80.0 to 50.0:50.0 to 20.0, wt% based on the mixture of such compounds.

Also suitable flame retardants are benzoguanidine compounds of formula V 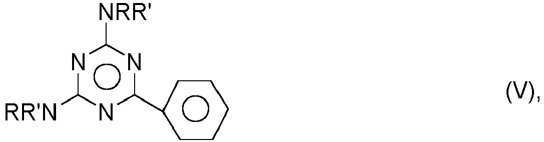 in which R, R' represents straight-chain or branched alkyl radicals having 1 to 10 carbon atoms, preferably hydrogen, and in particular adducts thereof with phosphoric acid, boric acid and/or pyrophosphoric acid.

Also preferred are allantoin compounds of formula VI, 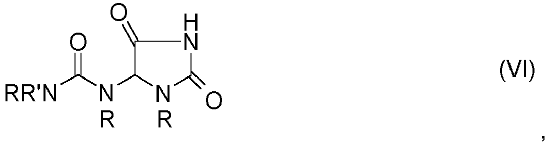 wherein R, R' are as defined in formula V, and also the salts thereof with phosphoric acid, boric acid and/or pyrophosphoric acid and also glycolurils of formula VII or the salts thereof with the abovementioned acids 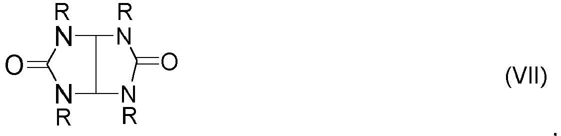 in which R is as defined in formula V.

Suitable products are commercially available or obtainable as per DE-A 196 14 424.

The cyanoguanidine (formula VIII) usable in accordance with the invention is obtainable for example by reacting calcium cyanamide with carbonic acid, the cyanamide produced dimerizing at from pH 9 to pH 10 to afford cyanoguanidine.

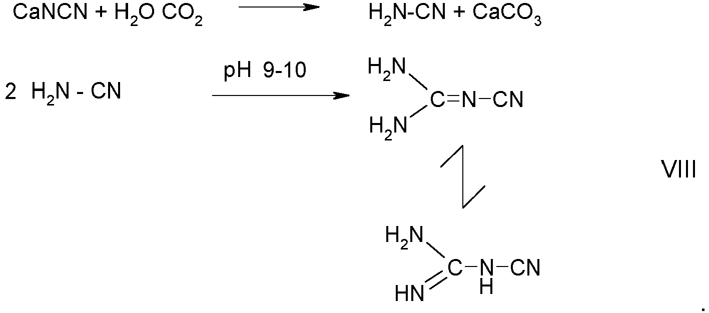

The commercially available product is a white powder having a melting point of 209 °C to 211 °C.

It is particularly preferable to employ melamine cyanurate (for example Melapur^{®} MC25 from BASF SE).

It is further possible to employ separate metal oxides such as antimony trioxide, antimony pentoxide, sodium antimonate and similar metal oxides. However it is preferable to eschew the use of such metal oxide since they are already present in component F. For a description of penta-bromobenzyl acrylate and antimony trioxide or antimony pentoxide reference may be made to EP-A 0 624 626.

It is also possible to employ phosphorus, for example red phosphorus, as flame retardant. Red phosphorus may for example be employed in the form of a masterbatch.

Also contemplated are dicarboxylic acids of formula 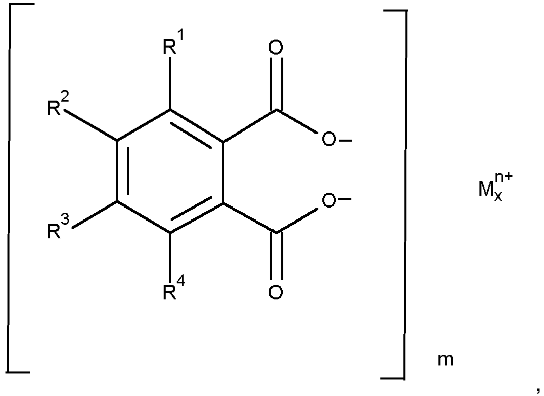 wherein
R₁ to R⁴ independently of one another represent halogen or hydrogen with the proviso that at least one radical R₁ to R⁴ represents halogen,
x = 1 to 3, preferably 1, 2
m = 1 to 9, preferably 1 to 3, 6, 9, in particular 1 to 3
n = 2 to 3
M = alkaline earth metal, Ni, Ce, Fe, In, Ga, Al, Pb, Y, Zn, Hg.

Preferred dicarboxylic acid salts comprise as radicals R₁ to R⁴ independently of one another Cl or bromine or hydrogen, especially preferably all radicals R₁ to R⁴ are Cl or/and Br.

Be, Mg, Ca, Sr, Ba, Al, Zn, Fe are preferred as metals M.

Such dicarboxylic acid salts are commercially available or producible according to the processes described in US 3,354,191.

Also employable as component E are functional polymers. These may be flame retardant polymers for example. Such polymers are described in US 8,314,202 for example and comprise 1,2-bis[4-(2-hydroxyethoxy)phenyl]ethanone repeating units. A further suitable functional polymer for increasing the amount of carbon residue is poly(2,6-dimethyl-1,4-phenyleneoxide) (PPPO).

The thermoplastic molding compositions of the invention can be produced by processes known per se, by mixing the starting components in conventional mixing apparatus, such as screw-based extruders, Brabender mixers, or Banbury mixers, and then extruding the same. After extrusion, the extrudate can be cooled and pelletized. It is also possible to premix individual components and then to add the remaining starting materials individually and/or likewise in the form of a mixture. The mixing temperatures are generally from 200 to 320 °C.

These materials are suitable for the production of fibers, foils, and moldings of any type. Some examples follow: extruded pipes, for example for automotive applications (e.g. brake fluid pipes), cable leading systems or cable management systems (cable tie, corrugated pipe), shoe soles, matrices for the production of rubber pipes (mandrels), sport equipment like ski shoes or football shoes.

The invention is further illustrated by the following examples.

### Examples

### Example I

### Preparation of plasticized PA 6 / polyolefin blends and test in the pipe extrusion

The polymers shown in the following Table 1 were compounded with the other components as indicated in Table 1 in a twin screw extruder ZE40 at 95 kg/h through a round nozzle having a diameter of 3 mm. Liquid plasticizers were directly dosed into the molten polymer. Granules of the polymer composition were obtained. These granules were processed by standard injection molding to obtain tensile bars or plaques. Furthermore, bars having a diameter of 14.5 cm were extruded from the granules. They were tested for extrusion applications. The injection molding was performed at a melt temperature of 250 °C. The results are listed in the following Table 1.

The amounts listed in the following tables are wt%.

The following components were used:

| | |
|---|---|
| PA 1: | Polyamide-6 having a relative viscosity of 2.4 (measured according to ISO 307, 1157, 1628 (0.5% in 96% H₂SO₄)(Ultramid^{®} B24 N 03 from BASF SE) |
| PA 2: | Polyamide-6 with approximately 10 wt% caprolactam (Ultramid^{®} B25 M 01 from BASF SE) |
| PA 3: | Polyamide-6/6.36 (hydrogenated), having a relative viscosity of 2.7 (measured according to ISO 307, 1157, 1628 (0.5% in phenol / orthodichlorbenzene 50 : 50) (Ultramid^{®} RX2298 from BASF SE) |
| PA 4: | Polyamide-6/6.36 having a relative viscosity of 2.9 (measured according to ISO 307, 1157, 1628 (0.5% in phenol / orthodichlorbenzene 50 : 50)) (Ultramid^{®} F29 from BASF SE) |
| Plasticizer 1: | N-(2-hydroxypropyl)benzene sulfonamide (Proviplast^{®} 2102 from Proviron) |
| Plasticizer 2: | Tetraethylene glycol (from Sigma-Aldrich) |
| Plasticizer 3: | Lauryllactam (from Sigma-Aldrich) |
| Plasticizer 4: | Caprolactam tablets |
| Plasticizer 5: | Polyethylene glycol 400 (PEG400) (from Sigma-Aldrich) |
| Plasticizer 6: | Polyethylene glycol 6000 (PEG6000) (from Sigma-Aldrich) |
| Elastomer 1: | Ethylene-propylene rubber grafted with maleic anhydride (Exxelor^{®} VA1801 from ExxonMobil Chemical) |
| Elastomer 2: | Ethylene-butyl acrylate-copolymer (LUCALEN^{®} A2540D from Basell) |
| Stabilizer 1: | Irganox^{®} B1171 from BASF SE |
| Stabilizer 2: | Irganox^{®} 1076 from BASF SE |
| Stabilizer 3: | Irganox^{®} 1098 from BASF SE |
| Stabilizer 4: | Natriumhypophosphite monohydrate |
| Stabilizer 5: | Irgafos^{®} 126 from BASF SE |
| Glass fiber: | PA-PBG-3660 |
| Lubricant 1: | Ethylene-bis-stearamide (EBS), Acrawachs^{®} C from Lonza Cologne GmbH |
| Lubricant 2: | Calciumstearate (Ceasit AV from Baerlocher GmbH) |
| Colorant: | Carbon black master batch (Ultrabatch 420 from BASF SE) |

**Table 1**

| | COMP 1a | COMP 1b | 1 | COMP 1c | 2 | COMP 1d |
|---|---|---|---|---|---|---|
| PA 1 | 57 | 54.5 | 54.5 | 52 | 52 | |
| PA 2 | | | | | | 57 |
| Elastomer 1 | 15 | 15 | 15 | 15 | 15 | 15 |
| Stabilizer 1 | 0.5 | 0.5 | 0.5 | 0.5 | 0.5 | 0.5 |
| Stabilizer 2 | 0.1 | 0.1 | 0.1 | 0.1 | 0.1 | 0.1 |
| TALKU M 100 / IT Extra | 0.4 | 0.4 | 0.4 | 0.4 | 0.4 | 0.4 |
| Elastomer 2 | 25 | 25 | 25 | 25 | 25 | 25 |
| PA 3 | 2.0 | 2.0 | 2.0 | 2.0 | 2.0 | 2.0 |
| Plasticizer 1 | | 2.5 | | 5 | | |
| Plasticizer 2 | | | 2.5 | | 5 | |
| Processing Pipe extrusion (pilot center, LU F206) | ++ | OK, smoke at nozzle | ++ | OK, smoke at nozzle | ++ | Smoke and deposit at nozzle |
| MVR 275/5kg, ISO1133 | 9 | 23 | 11 | 10 | 13 | 6 |
| Tensile modulus (dry/cond.), ISO527 | 1000/347 | 938/216 | 588 / 260 | 588/216 | 376 / 239 | 680 / 285 |
| Tensile stress at break (dry/cond.), ISO527 | 35/30 | 36/19 | 37/34 | 36/17 | 35/34 | 35/37 |
| Tensile elong at break, (dry/cond.), ISO527 | 200 / 316 | 203 / 318 | 264 / 340 | 256 / 330 | 261/320 | 189 / 320 |
| Charpy notched impact strength (23 °C) (dry/cond.), ISO 179/1eA | 99/NB | 101/NB | 104/NB | 100/NB | NB/NB | 102/NB |
| Charpy notched impact strength (-30 °C) (dry), ISO 179/1eA | 23 | 20 | 24 | 20 | 21 | 19 |
| Glass Transition Temp (DMTA) | 55 | 45 | 35 | 35 | 13 | - |

The ISO norms are those as valid in 2020.

From the results it is evident that tetraethylene glycol (plasticizer 2) shows a significantly higher decrease of the tensile modules when compared to the sulfonamide of plasticizer 1 at the same application levels.

### Example II

Preparation of plasticized glass fiber reinforced and impact modified PA 6.

The compositions defined in the following Table 2 (amounts in wt%) were compounded in a twin screw extruder ZE25 at 45 kg/h and extruded through a round nozzle with a diameter of 3 mm. The plasticizer and lubricant was directly added to the melt.

The granules were injection molded, and the moldings were characterized as indicated in Table 2.

**Table 2**

| | COMP 2a | 3 | 4 |
|---|---|---|---|
| PA 1 | 51.2 | 49.2 | 46.2 |
| Plasticizer 2 | 0 | 2 | 5 |
| Elastomer 1 | 5 | 5 | 5 |
| Elastomer 2 | 10 | 10 | 10 |
| Glass fiber | 30 | 30 | 30 |
| Lubricant 1 | 0.2 | 0.2 | 0.2 |
| Lubricant 2 | 0.1 | 0.1 | 0.1 |
| Stabilizer 3 | 0.15 | 0.15 | 0.15 |
| Colorant | 3.35 | 3.35 | 3.35 |
| MVR 275/5kg, ISO1133 | 54 | 77 | 134 |
| Tensile modulus (dry/cond.), ISO527 | 7663 / 4450 | 6824 / 4228 | 5593 / 4215 |
| Tensile stress at break (dry/cond.), ISO527 | 115/80 | 107 / 78 | 94 / 77 |
| Tensile elong at break, (dry/cond.), ISO527 | 4.5 / 11.6 | 6.0 / 10.5 | 8.4 / 8.4 |
| Charpy notched impact strength (23 °C) (dry/cond.), ISO 179/1eA | 15/21 | 14/24 | 16/25 |
| Charpy notched impact strength (-30 °C) (dry), ISO 179/1eA | 10 | 9 | 8 |

By including the tetraethylene glycol (plasticizer 2), the tensile elongation at break (dry) could be significantly improved.

### Example III

### Preparation of plasticized compounds based on PA 6/6.36

The components listed in the following Table 3 (in wt%) were compounded in a twin screw extruder ZSK25 at 16 kg/h, followed by underwater granulation. The plasticizers were directly added to the melt.

The granules obtained were injection molded, and the moldings were characterized. The results are summarized in Table 3 below.

**Table 3**

| | 5 | 6 | COMP 3a | COMP 3b | COMP 3c | COMP 3d | COMP 3e | COMP 3f |
|---|---|---|---|---|---|---|---|---|
| PA 4 | 96.34 | 95.34 | 92.84 | 87.84 | 92.84 | 87.84 | 92.84 | 87.84 |
| Lubricant 2 | 0.4 | 0.4 | 0.4 | 0.4 | 0.4 | 0.4 | 0.4 | 0.4 |
| Lubricant 1 | 0.2 | 0.2 | 0.2 | 0.2 | 0.2 | 0.2 | 0.2 | 0.2 |
| TALKUM 100 / Talkum IT extra | 0.01 | 0.01 | 0.01 | 0.01 | 0.01 | 0.01 | 0.01 | 0.01 |
| Stabilizer 4 | 0.05 | 0.05 | 0.05 | 0.05 | 0.05 | 0.05 | 0.05 | 0.05 |
| Stabilizer 5 | 0.25 | 0.25 | 0.25 | 0.25 | 0.25 | 0.25 | 0.25 | 0.25 |
| Stabilizer 3 | 0.25 | 0.25 | 0.25 | 0.25 | 0.25 | 0.25 | 0.25 | 0.25 |
| Plasticizer 2 | 2.5 | 3.5 | | | | | | |
| Plasticizer 1 | | | 5 | 10 | | | | |
| Plasticizer 3 | | | | | 5 | 10 | | |
| Plasticizer 4 | | | | | | | 5 | 10 |
| Evaluation of injection molded parts, ISO1133 | ++ | ++ | OK | OK | white blooming after several days | white blooming after several days | stench | stench |
| Tensile modulus (dry/cond.), ISO527 | 788 / 464 | 680 / 457 | 657 / 403 | 433 / 342 | 945/431 | 599/381 | 533/386 | 347/342 |
| Tensile stress at yield (dry/cond.), ISO527 | 32/26 | 30 / 26 | 29 / 24 | 23/20 | 34/25 | 25 / 23 | 27 / 23 | 20/20 |
| Tensile elong at break, (dry/cond.), ISO527 | 436 / 402 | 415/390 | 337/390 | 398/375 | 358 / 354 | 429/416 | 424/390 | 373/378 |
| Charpy notched impact strength (23 °C) (dry/cond.), ISO 179/1eA | 11 / n.b. | 16 / n.b. | 9 /n.b. | 24 / n.b. | 5 / n.b. | 5 / n.b. | 19 / n.b. | n.b./ n.b. |
| Charpy notched impact strength (-30 °C) (dry), ISO 179/1eA | 5 | 4 | 4 | 3 | 5 | 3 | 3 | 3 |
| MVR 275/5 kg, ISO1133 | 190 | 220 | 287 | >300 | 193 | 262 | 185 | 184 |

Part of the comparative moldings showed white blooming after several days or had an inappropriate stench so that the moldings were not of a practical use.

The tensile modulus, tensile stress at yield and the tensile elongation at break were improved for the moldings made from compositions 5 and 6.

### Example IV

In Example 4 impact modified formulations comparable to example 1 with 2.5 and 4.0 wt.% tetraethylene glycol (examples 7 and 8) were compared with formulations which contain polyethylene glycol 400 (PEG400) (comp. examples 1e and 1f) and polyethylene glycol 6000 (PEG6000) (comp. examples 1g and 1h) with a similar loading. The tensile modulus in the dry state shows the plasticizing effect (low tensile modulus -> high plasticizing effect).

The inventive materials which are plasticized with tetraethylene glycol show the lowest tensile modulus. In case of tetraethylene glycol increasing the plasticizer content from 2.5 wt.% up to 4 wt.% leads to a very soft material with a tensile modulus of 428 MPa. In case of PEG400 and PEG6000 the increase of the plasticizer content from 2.5 to 4.0 wt.% has not such a significant plasticizing effect anymore. Most likely the solubility of PEG400 and PEG6000 in polyamide is limited so that only a small plasticizing effect at low loadings below 4 wt.% can be obtained with these plasticizers.

The polymers shown in the following Table 4 were compounded with the other components as indicated in Table 4 in a twin screw extruder ZSK25 at 15 kg/h through a round nozzle having a diameter of 2 mm and an underwater granulation. Liquid plasticizers were directly dosed into the molten polymer. Granules of the polymer composition were obtained. These granules were processed by standard injection molding to obtain tensile bars or plaques. The injection molding was performed at a melt temperature of 250 °C. The results are listed in the following Table.

| | 7* | 8 | COMP1e | COMP1f | COMP1g | COMP1h |
|---|---|---|---|---|---|---|
| PA 1 | 54.5 | 53 | 54.5 | 53 | 54.5 | 53 |
| PA 2 | | | | | | |
| Elastomer 1 | 15 | 15 | 15 | 15 | 15 | 15 |
| Stabilizer 1 | 0.5 | 0.5 | 0.5 | 0.5 | 0.5 | 0.5 |
| Stabilizer 2 | 0.1 | 0.1 | 0.1 | 0.1 | 0.1 | 0.1 |
| TALKUM 100 / IT Extra | 0.4 | 0.4 | 0.4 | 0.4 | 0.4 | 0.4 |
| Elastomer 2 | 25 | 25 | 25 | 25 | 25 | 25 |
| PA 3 | 2.0 | 2.0 | 2.0 | 2.0 | 2.0 | 2.0 |
| Plasticizer 2 | 2.5 | 4 | | | | |
| Plasticizer 5 | | | 2.5 | 4 | | |
| Plasticizer 6 | | | | | 2.5 | 4 |
| MVR 275/5kg, ISO1133 | 36 | 44 | 38 | 49 | 23 | 23 |
| Tensile modulus (dry/cond.), ISO527 | 623/ - | 428/- | 741/ - | 659/- | 972 / - | 920/- |
| Tensile stress at break (dry/cond.), ISO527 | 28/- | 28/- | 31 /- | 29/- | 30/- | 29/- |
| Tensile elong at break, (dry/cond.), ISO527 | 175/- | 215/- | 193/- | 194/- | 157/- | 158/- |
| Charpy notched impact strength (23 °C) (dry/cond.), ISO 179/1 eA | 92/- | 90/- | 97/- | 86/- | 90/- | 90/- |
| Charpy notched impact strength (-30 °C) (dry), ISO 179/1eA | 19 | 17 | 20 | 17 | 22 | 27 |

| | | | | | | |
|---|---|---|---|---|---|---|
| * Formulation Example 7 is comparable to Example 1 but compounding was carried out on a different extruder | | | | | | |

## Claims

1. A thermoplastic molding composition, comprising
a) 39.9 to 99.9 wt% of at least one thermoplastic polyamide as component A,
b) 0.1 to 10 wt% of at least one plasticizer of the general formula (1)
R₁-O-(CH₂CH₂-O-)ₙR₂ (1)
with n = 1 to 4
R₁, R₂ independently H, C₁₋₁₂-alkyl, phenyl or tolyl,
having a boiling point of more than 250 °C, as component B,
c) 0 to 45 wt% of at least one elastomeric polymer as component C,
d) 0 to 60 wt% of at least one fibrous and/or particulate filler as component D,
e) 0 to 25 wt% of further additives as component E,
wherein the total of wt% of components A to E is 100 wt%.

2. The thermoplastic molding composition according to claim 1, wherein component B has a boiling point of at least 290 °C, preferably at least 300 °C.

3. The thermoplastic molding composition according to claim 1 or 2, wherein in general formula (1) R₁ and R₂ independently are H or C₁₋₈-alkyl, preferably H or C₁₋₃-alkyl, more preferably H.

4. The thermoplastic molding composition according to one of claims 1 to 3, wherein component A is an aliphatic polyamide or semiaromatic polyamide.

5. The thermoplastic molding composition according to one of claims 1 to 4, wherein component A is selected from PA 6, PA 66, PA 6/66, PA 66/6, PA 12, PA 6.10, PA 6T/6, PA 6I/6T, PA 6T/6I, PA 9T, PA 4T and copolyamides produced by polymerization of the components
A') 15% to 84% by weight of at least one lactam,
B') 16% to 85% by weight of a monomer mixture (M) comprising the components
B1') at least one C₃₂-C₄₀-dimer acid and
B2') at least one C₄-C₁₂-diamine,
wherein the percentages by weight of the components A') and B') are in each case based on the sum of the percentages by weight of the components A') and B'), or mixtures thereof, and is preferably selected from PA 6, PA 66, PA 6/66, PA 66/6, PA 6/6.36 or mixtures thereof.

6. The thermoplastic molding composition according to one of claims 1 to 5, wherein component C is present in an amount of from 1 to 45 wt% and is selected from
b1) copolymers of ethylene with at least one comonomer selected from C₃₋₁₂-olefins, C₁₋₁₂-alkyl (meth)acrylates, (meth)acrylic acid and maleic anhydride as component B1),
b2) polyethylene or polypropylene as component B2),
wherein components B1) and B2) may also be additionally grafted with maleic anhydride, and is preferably selected from ethylene-propylene rubbers, ethylene-propylene-diene rubbers, ethylene-butyl acrylate copolymers, copolymers of ethylene and/or propylene and maleic anhydride.

7. The thermoplastic molding composition according to one of claims 1 to 6, wherein component D comprises glass fibers, and is present in an amount of from 10 to 50 wt%, preferably 15 to 45 wt%, more preferably 20 to 40 wt%.

8. A process for preparing the thermoplastic molding composition according to one of claims 1 to 7 by mixing the components A to E.

9. The use of the thermoplastic molding composition according to one of claims 1 to 7 for producing fibers, foils and moldings of any type.

10. A fiber, foil or molding, made of the thermoplastic molding composition according to one of claims 1 to 7.

11. The use of a compound of the general formula (1)
R₁-O-(CH₂CH₂-O-)ₙR₂ (1)
with n = 1 to 4
R₁, R₂ independently H, C₁₋₁₂-alkyl, phenyl or tolyl,
having a boiling point of more than 250 °C as plasticizer for thermoplastic polyamides.

12. The use according to claim 11, wherein the compound of the general formula (1) has a boiling point of at least 290 °C, preferably at least 300 °C.

13. The use according to claim 11 or 12, wherein in general formula (1) R₁ and R₂ independently are H or C₁₋₈-alkyl, preferably H or C₁₋₃-alkyl, more preferably H.

## Patentansprüche

1. Thermoplastische Formmasse, enthaltend
a) 39,9 bis 99,9 Gew.-% mindestens eines thermoplastischen Polyamids als Komponente A,
b) 0,1 bis 10 Gew.-% mindestens eines Weichmachers der allgemeinen Formel (1)
Rₗ-0- (CH₂CH₂-O-)ₙR₂ (1)
wobei n = 1 bis 4 und
R₁ und R₂ unabhängig für H, C₁₋₁₂-Alkyl, Phenyl oder Tolyl stehen,
mit einem Siedepunkt von mehr als 250 °C als Komponente B,
c) 0 bis 45 Gew.-% mindestens eines elastomeren Polymers als Komponente C,
d) 0 bis 60 Gew.-% mindestens eines faser- und/oder teilchenförmigen Füllstoffs als Komponente D,
e) 0 bis 25 Gew.-% weiterer Zusatzstoffe als Komponente E,
wobei die Summe der Gew.-%-Anteile der Komponenten A bis E 100 Gew.-% ergibt.

2. Thermoplastische Formmasse nach Anspruch 1, wobei Komponente B einen Siedepunkt von mindestens 290 °C, vorzugsweise mindestens 300 °C, aufweist.

3. Thermoplastische Formmasse nach Anspruch 1 oder 2, wobei in der allgemeinen Formel (1) R₁ und R₂ unabhängig für H oder C₁₋₈-Alkyl, vorzugsweise H oder C₁₋₃-Alkyl, weiter bevorzugt H, stehen.

4. Thermoplastische Formmasse nach einem der Ansprüche 1 bis 3, wobei es sich bei Komponente A um ein aliphatisches Polyamid oder teilaromatisches Polyamid handelt.

5. Thermoplastische Formmasse nach einem der Ansprüche 1 bis 4, wobei Komponente A ausgewählt ist aus PA 6, PA 66, PA 6/66, PA 66/6, PA 12, PA 6.10, PA 6T/6, PA 6I/6T, PA 6T/6I, PA 9T, PA 4T und Copolyamiden, hergestellt durch Polymerisation der Komponenten
A') 15 Gew.-% bis 84 Gew.-% mindestens eines Lactams,
B') 16 Gew.-% bis 85 Gew.-% einer Monomerenmischung (M), umfassend die Komponenten
B1') mindestens eine C₃₂-C₄₀-Dimersäure und
B2') mindestens ein C₄-C₁₂-Diamin,
wobei sich die Gewichtsprozente der Komponenten A') und B') jeweils auf die Summe der Gewichtsprozente der Komponenten A') und B') beziehen, oder Mischungen davon und vorzugsweise ausgewählt ist aus PA 6, PA 66, PA 6/66, PA 66/6, PA 6/6.36 oder Mischungen davon.

6. Thermoplastische Formmasse nach einem der Ansprüche 1 bis 5, wobei Komponente C in einer Menge von 1 bis 45 Gew.-% vorliegt und ausgewählt ist aus
b1) Copolymeren von Ethylen mit mindestens einem Comonomer, ausgewählt aus C₃₋₁₂-Olefinen, C₁₋₁₂-Alkyl(meth)acrylaten, (Meth)acrylsäure und Maleinsäureanhydrid, als Komponente B1),
b2) Polyethylen oder Polypropylen als Komponente B2), wobei Komponente B1) und B2) auch zusätzlich mit Maleinsäureanhydrid gepfropft sein können, und vorzugsweise ausgewählt ist aus Ethylen-Propylen-Kautschuken, Ethylen-Propylen-Dien-Kautschuken, Ethylen-Butylacrylat-Copolymeren, Copolymeren von Ethylen und/oder Propylen und Maleinsäureanhydrid.

7. Thermoplastische Formmasse nach einem der Ansprüche 1 bis 6, wobei Komponente D Glasfasern umfasst und in einer Menge von 10 bis 50 Gew.-%, vorzugsweise 15 bis 45 Gew.-%, weiter bevorzugt 20 bis 40 Gew.-%, vorliegt.

8. Verfahren zur Herstellung der thermoplastischen Formmasse nach einem der Ansprüche 1 bis 7 durch Vermischen der Komponenten A bis E.

9. Verwendung der thermoplastischen Formmasse nach einem der Ansprüche 1 bis 7 zur Herstellung von Fasern, Folien und Formkörpern jeglicher Art.

10. Faser, Folie oder Formkörper aus der thermoplastischen Formmasse nach einem der Ansprüche 1 bis 7.

11. Verwendung einer Verbindung der allgemeinen Formel (1)
R₁-O-(CH₂CH₂-O-)ₙR₂ (1)
wobei n = 1 bis 4 und
R₁ und R₂ unabhängig für H, C₁₋₁₂-Alkyl, Phenyl oder Tolyl stehen,
mit einem Siedepunkt von mehr als 250 °C als Weichmacher für thermoplastische Polyamide.

12. Verwendung nach Anspruch 11, wobei die Verbindung der allgemeinen Formel (1) einen Siedepunkt von mindestens 290 °C, vorzugsweise mindestens 300 °C, aufweist.

13. Verwendung nach Anspruch 11 oder 12, wobei in der allgemeinen Formel (1) R₁ und R₂ unabhängig für H oder C₁₋₈-Alkyl, vorzugsweise H oder C₁₋₃-Alkyl, weiter bevorzugt H, stehen.

## Revendications

1. Composition de moulage thermoplastique, comprenant
a) 39,9 à 99,9 % en poids d'au moins un polyamide thermoplastique comme composant A,
b) 0,1 à 10 % en poids d'au moins un plastifiant de la formule générale (1)
R₁-O-(CH₂CH₂-O-)ₙR₂ (1)
avec n = 1 à 4
R₁, R₂ étant indépendamment H, C₁₋₁₂-alkyle, phényle ou tolyle,
ayant un point d'ébullition supérieur à 250 °C, en tant que composant B,
c) 0 à 45 % en poids d'au moins un polymère élastomérique comme composant C ;
d) 0 à 60 % en poids d'au moins une charge fibreuse et/ou particulaire comme composant D,
e) 0 à 25 % en poids d'additifs supplémentaires comme composant E,
le total de % en poids des composants A à F étant de 100 % en poids.

2. Composition de moulage thermoplastique selon la revendication 1, le composant B ayant un point d'ébullition d'au moins 290 °C, de préférence au moins 300 °C.

3. Composition de moulage thermoplastique selon la revendication 1 ou 2, dans la formule générale (1) R₁ et R₂ étant indépendamment H ou C₁₋₈-alkyle, de préférence H ou C₁₋₃-alkyle, plus préférablement H.

4. Composition de moulage thermoplastique selon l'une des revendications 1 à 3, le composant A étant un polyamide aliphatique ou un polyamide semi-aromatique.

5. Composition de moulage thermoplastique selon l'une des revendications 1 à 4, le composant A étant choisi parmi PA 6, PA 66, PA 6/66, PA 66/6, PA 12, PA 6.10, PA 6T/6, PA 6I/6T, PA 6T/6I, PA 9T, PA 4T et des copolyamides produits par polymérisation des composants
A') 15 % à 84 % en poids d'au moins un lactame,
B') 16 % à 85 % en poids d'un mélange de monomères (M) comprenant les composants
B1') au moins un acide dimère en C₃₂-C₄₀ et
B2') au moins une C₄-C₁₂-diamine,
les pourcentages en poids des composants A') et B') étant en chaque cas basés sur la somme des pourcentages en poids des composants A') et B'), ou de mélanges correspondants, et étant de préférence choisis parmi PA 6, PA 66, PA 6/66, PA 66/6, PA 6/6.36 ou des mélanges correspondants.

6. Composition de moulage thermoplastique selon l'une des revendications 1 à 5, le composant C étant présent en une quantité allant de 1 à 45 % en poids et étant choisi parmi
b1) des copolymères d'éthylène avec au moins un comonomère choisi parmi des C₃₋₁₂-oléfines, des (méth) acrylate de C₁₋₁₂-alkyle, l'acide (méth) acrylique et l'anhydride maléique comme composant B1),
b2) polyéthylène ou polypropylène comme composant B2), les composants B1) et B2) pouvant également être greffés avec de l'anhydride maléique et étant de préférence choisis parmi des caoutchoucs d'éthylène-propylène, des caoutchoucs d'éthylène-propylène-diène, des copolymères d'éthylène-acrylate de butyle, des copolymères d'éthylène et/ou de propylène et de l'anhydride maléique.

7. Composition de moulage thermoplastique selon l'une des revendications 1 à 6, le composant D comprenant des fibres de verre, et étant présent en une quantité allant de 10 à 50 % en poids, de préférence de 15 à 45 % en poids, plus préférablement de 20 à 40 % en poids.

8. Procédé de préparation de la composition de moulage thermoplastique selon l'une des revendications 1 à 7 par mélange des composants A à E.

9. Utilisation de la composition de moulage thermoplastique selon l'une des revendications 1 à 7 pour la production de fibres, de feuilles et de moulages de tout type.

10. Fibre, feuille ou moulage, composé(e) de la composition de moulage thermoplastique selon l'une des revendications 1 à 7.

11. Utilisation d'un composé de la formule générale (1)
R₁-O-(CH₂CH₂-O-)ₙR₂ (1)
avec n = 1 à 4
R₁, R₂ étant indépendamment H, C₁₋₁₂-alkyle, phényle ou tolyle,
ayant un point d'ébullition supérieur à 250 °C comme plastifiant pour des polyamides thermoplastiques.

12. Utilisation selon la revendication 11, le composé de la formule générale (1) ayant un point d'ébullition d'au moins 290 °C, de préférence d'au moins 300 °C.

13. Utilisation selon la revendication 11 ou 12, dans la formule générale (1) R₁ et R₂ indépendamment étant H ou C₁₋₈-alkyle, de préférence H ou C₁₋₃-alkyle, plus préférablement H.
